(19) Europäisches Patentamt / European Patent Office / Office européen des brevets

(11) **EP 3 378 918 B1**

(12) **EUROPEAN PATENT SPECIFICATION**

(45) Date of publication and mention of the grant of the patent:
**20.12.2023 Bulletin 2023/51**

(21) Application number: **16866329.2**

(22) Date of filing: **15.11.2016**

(51) International Patent Classification (IPC):
**C09K 5/04** *(2006.01)*     **F25B 1/00** *(2006.01)*

(52) Cooperative Patent Classification (CPC):
**C09K 5/045; C09K 5/04; F25B 1/00**

(86) International application number:
**PCT/JP2016/083873**

(87) International publication number:
**WO 2017/086328 (26.05.2017 Gazette 2017/21)**

(54) **USE OF A COMPOSITION CONTAINING MIXTURE OF FLUORINATED HYDROCARBONS**

VERWENDUNG EINER ZUSAMMENSETZUNG MIT EINER MISCHUNG AUS FLUORIERTEN KOHLENWASSERSTOFFEN

UTILISATION D'UNE COMPOSITION CONTENANT UN MÉLANGE D'HYDROCARBURES FLUORÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.11.2015 JP 2015227938**

(43) Date of publication of application:
**26.09.2018 Bulletin 2018/39**

(73) Proprietor: **Daikin Industries, Ltd.**
**Osaka-shi, Osaka 530-0001 (JP)**

(72) Inventors:
• **ITANO, Mitsushi**
  **Osaka-Shi, Osaka 5300001 (JP)**
• **YAMADA, Yasufu**
  **Osaka-Shi, Osaka 5300001 (JP)**
• **TSUCHIYA, Tatsumi**
  **Osaka-Shi, Osaka 5300001 (JP)**
• **KUROKI, Hitomi**
  **Osaka-Shi, Osaka 5300001 (JP)**

(74) Representative: **Hoffmann Eitle**
**Patent- und Rechtsanwälte PartmbB**
**Arabellastraße 30**
**81925 München (DE)**

(56) References cited:
EP-A2- 2 367 601     JP-A- 2013 529 703
JP-A- 2015 129 289     JP-A- 2015 511 262
JP-A- 2015 522 672     US-A1- 2013 096 218
US-A1- 2014 331 697     US-A1- 2015 089 965

**Description**

Technical Field

The present invention relates to the use of a composition comprising a mixture of fluorinated hydrocarbons as a refrigerant in specific refrigeration devices. The present invention also includes a case in which the composition consists of the four basic components contained in the mixture, i.e., difluoromethane (R32), pentafluoroethane (R125), 2,3,3,3-tetrafluoropropene (1234yf), and 1,1,1,2-tetrafluoroethane (R134a).

Background Art

Refrigerants recently used, for example, for air conditioners, refrigerating devices, and refrigerators, are mixtures of fluorinated hydrocarbons that contain no chlorine in their molecular structures, such as difluoromethane ($CH_2F_2$, R32, boiling point: -52°C), pentafluoroethane ($CF_3CHF_2$, R125, boiling point: -48°C), 1,1,1-trifluoroethane ($CF_3CH_3$, R143a, boiling point: -47°C), 1,1,1,2-tetrafluoroethane ($CF_3CH_2F$, R134a, boiling point: -26°C), 1,1-difluoroethane ($CHF_2CH_3$, R152a, boiling point: -24°C), and 2,3,3,3-tetrafluoropropene ($CF_3CF=CH_2$, 1234yf, boiling point: -29°C) .

Among the above fluorinated hydrocarbons, a ternary mixed refrigerant of R32/R125/R134a in which the proportions thereof are 23/25/52 wt% (R407C), and a ternary mixed refrigerant of R125/143a/R134a in which the proportions thereof are 44/52/4 wt% (R404A), have been proposed, and R404A is currently widely used as a refrigerant for freezing and refrigerated storage (for example, JP-B-2869038 and US 8,168,077).

However, the global warming potential (GWP) of R404A is as high as 3922, which is equal to that of $CHCIF_2$ (R22), which is a chlorine-containing fluorinated hydrocarbon. There is thus a desire to develop, as alternative refrigerants for R404A, refrigerants that have a refrigerating capacity equal to that of R404A, a lower GWP, and performance of non-flammable refrigerants (ASHRAE non-flammability (class 1 refrigerants defined in ANSI/ASHRAE 34-2013)), as with R404A.

There are still many refrigerating devices that use $CHCIF_2$ (R22) as chlorine-containing fluorinated hydrocarbons (HCFCs), which were used as refrigerants for freezing and refrigerated storage prior to the use of R404A; however, under the Montreal Protocol, HCFCs are required to be abolished by 2020 in developed countries, and to be phased out (first: 10%, second: 35%) in developing countries. For these refrigerating devices, there is also a desire to develop, as alternative refrigerants for R22, refrigerants that have a compressor outlet pressure equal to that of R22 used in a refrigeration cycle ("R22 retrofit refrigerants"), a lower GWP, and performance of non-flammable refrigerants (ASHRAE non-flammability (class 1 refrigerants defined in ANSI/ASHRAE 34-2013)), as with R22.

There are, for example, JP-B-5689068 and JP-A-2013-529703 as other prior art relating to the present invention.

US-A-2013/096218 discloses a heat transfer composition comprising 5-40% difluoromethane (R-32), 5-40% pentafluoroethane (R-125), 5-60% 1,1,1,2-tetrafluoroethane (R-134a) and 5-85% 2,3,3,3-tetrafluoropropene (1234yf), and more specifically describes compositions of R-32/R-125/R-134a/1234yf at 15/15/25/45 % or 15/15/35/35 %.

US-A-2014/331697 describes refrigerant compositions comprising 23.3-24.5% R-32, 24.5-25.7% R-125, 25.5-26.7% R-134a and 24.3-25.5% 1234yf, and specifically a composition of R-32/R-125/R-134a/1234yf at 15/20/35/30 %.

Summary of Invention

Technical Problem

JP-B-5689068 and JP-A-2013-529703 report, as alternative refrigerants for R404A, refrigerant compositions comprising difluoromethane (R32), pentafluoroethane (R125), 2,3,3,3-tetrafluoropropene (1234yf), and 1,1,1,2-tetrafluoroethane (R134a). However, no one has succeeded in developing a refrigerant composition that has a refrigerating capacity equal to that of R404A, a lower GWP, and ASHRAE non-flammability performance.

An object of the present invention is to provide a refrigerant composition that has a low GWP and ASHRAE non-flammability performance. Another object of the present invention is to provide, as preferable embodiments, a refrigerant composition that has a refrigerating capacity equal to that of currently widely used R404A, a lower GWP, and ASHRAE non-flammability performance, a refrigerant composition that has a compressor outlet pressure equal to that of R22, a lower GWP, and ASHRAE non-flammability performance.

Solution to Problem

The present inventors conducted extensive research to achieve the above object, and consequently found that the above object can be achieved by a composition comprising a mixture of fluorinated hydrocarbons, the mixture comprising difluoromethane (R32), pentafluoroethane (R125), 2,3,3,3-tetrafluoropropene (1234yf), and 1,1,1,2-tetrafluoroethane (R134a) at specific concentrations. Thus, the present invention has been accomplished.

Specifically, the present invention provides the use of a composition comprising a mixture or mixtures of fluorinated hydrocarbons;

the composition comprising the following mixture consisting of R32, R125, 1234yf, R134a and optionally $\leq 0.5$ wt.% of other components, wherein the composition ratio of the fluorinated hydrocarbons contained in the mixture is indicated in a ternary composition diagram in which the sum of the concentrations of R125, 1234yf, and R134a is represented by (100-x) wt%, when the sum of the concentrations of R32, R125, 1234yf, and R134a is 100 wt%, and the concentration of R32 is x wt%,

the mixture having a composition ratio in which

(1) $20.0 > x \geq 18.1$ wt%, and

(2) the concentrations of R125, 1234yf, and 134a (R125 concentration (wt%)/1234yf concentration (wt%)/134a concentration (wt%)) fall within a quadrilateral having the following points B', C', F' and E' as vertices:

B' (-1.0442x+33.87/0.2539x$^2$-14.531x+212.38/100-R32-R125-1234yf),
C' (-1.3145x+43.588/-2.4717x+59.031/100-R32-R125-1234yf),
F' (-1.258x+39.651/0.0607x$^2$-4.7348x+75.905/100-R32-R125-1234yf), and
E' (-0.8869x+28.126/0.1994x$^2$-11.991x+177.97/100-R32-R125-1234yf),

as a refrigerant in any of refrigerating devices for freezing and refrigerating warehouses, turbo refrigerators, and screw refrigerators.

Preferred embodiments of the invention are as defined in the appended dependent claims and/or in the following detailed description.

Advantageous Effects of Invention

The composition used in the present invention is a composition comprising a mixture of fluorinated hydrocarbons, the mixture comprising difluoromethane (R32), pentafluoroethane (R125), 2,3,3,3-tetrafluoropropene (1234yf), and 1,1,1,2-tetrafluoroethane (R134a) at specific concentrations, whereby the composition has a GWP of 1500 or less and ASHRAE non-flammability performance.

Brief Description of Drawings

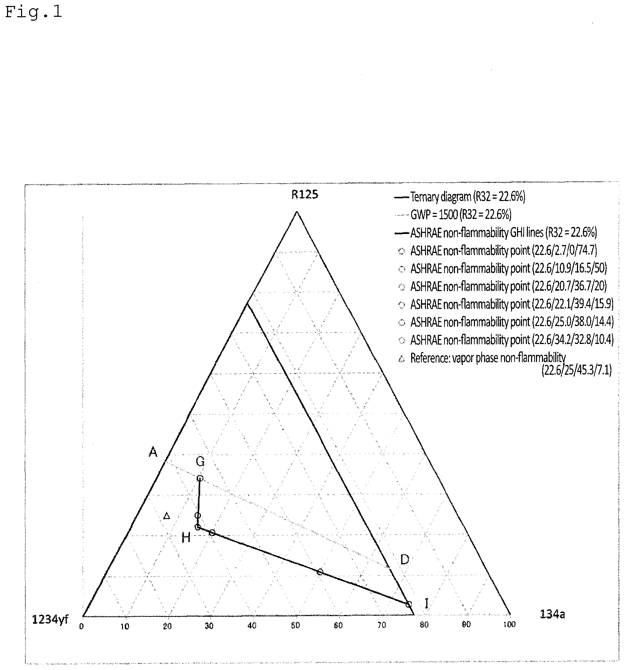

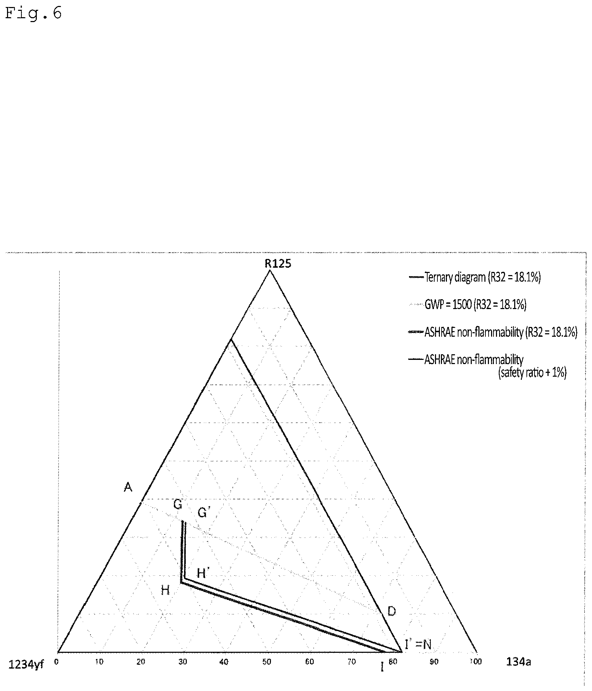

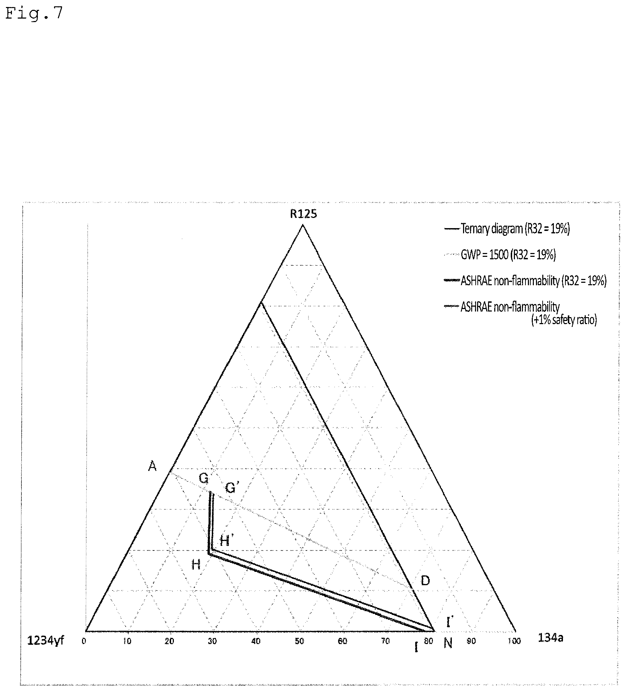

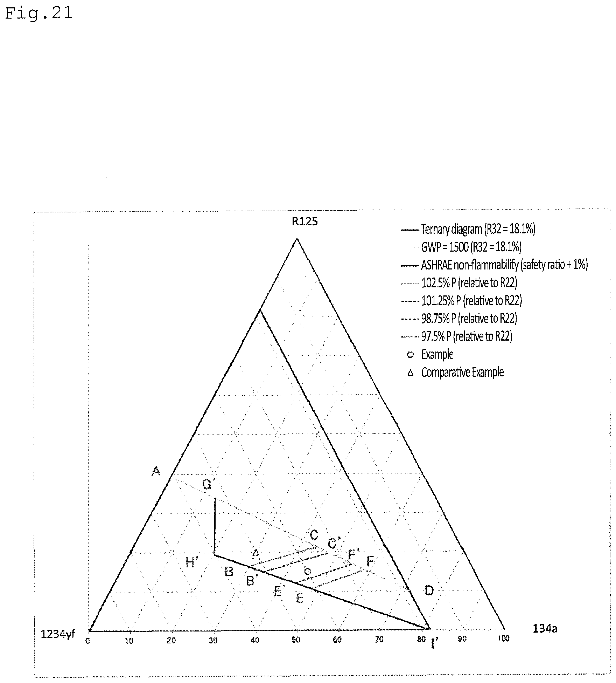

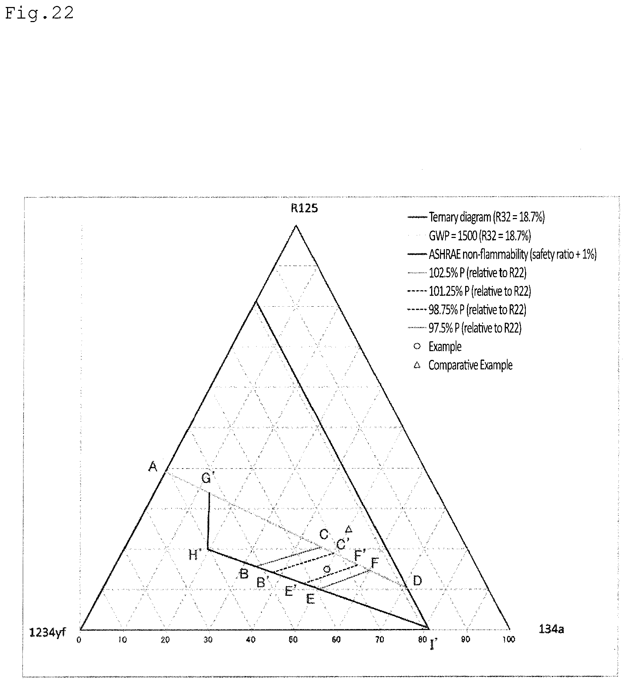

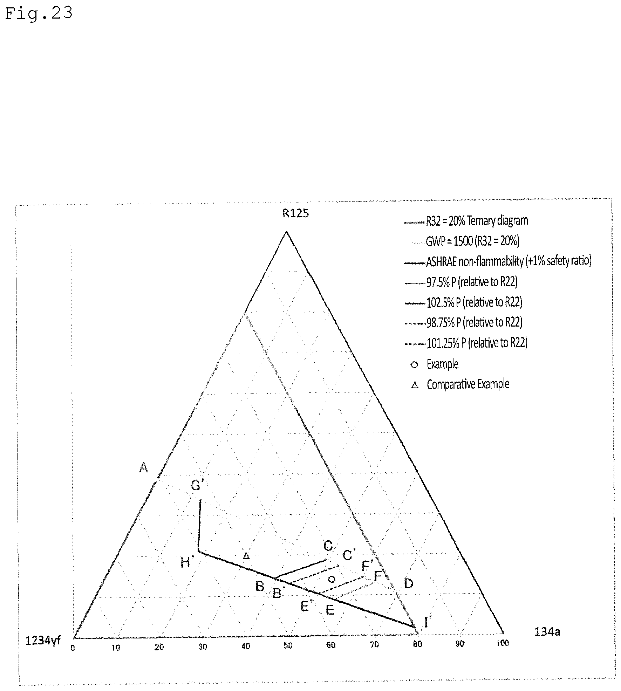

Fig. 1 shows ASHRAE non-flammability limit compositions (six open circles) of a mixture of the four basic components: difluoromethane (R32), pentafluoroethane (R125), 2,3,3,3-tetrafluoropropene (1234yf), and 1,1,1,2-tetrafluoroethane (R134a), and regression lines connecting these points (a straight line connecting points G and H; and a straight line connecting points H and I), in a ternary composition diagram of R125, 1234yf, and R134a when the concentration of R32 is 22.6 wt% (not covered by the claimed invention), determined from Experimental Example 1. Figs. 6 and 7 show the compositions of the above mixture (a pentagon surrounded by points G, H, I, N, and D; and a pentagon surrounded by points G', H', I', N, and D) in a ternary composition diagram of R125, 1234yf, and R134a, when the concentration of R32 is 18.1 wt%, and 19.0 wt%, respectively. The 1234yf side from line segment AD shows a region with a GWP of 1500 or less, and the R125 side from line segments GHI (which mean line segment GH and line segment HI, which are collectively referred to as "line segments GHI"; hereinafter the same) shows a region showing ASHRAE non-flammability. The pentagon surrounded by points G, H, I, N, and D represents a region with a GWP of 1500 or less and showing ASHRAE non-flammability. The pentagon surrounded by points G', H', I', N, and D represents a region with a GWP of 1500 or less and showing ASHRAE non-flammability in which safety factors, described later, are taken into consideration for nonflammable refrigerants R134a and R125. Figs. 21-23 show the compositions of the above mixture (a quadrilateral surrounded by points B, C, F, and E; and a quadrilateral surrounded by points B', C', F', and E') in a ternary composition diagram of R125, 1234yf, and R134a, when the concentration of R32 is 18.1 wt%, 18.7 wt% and 20.0 wt% (upper limit value not covered by the claims). The quadrilateral surrounded by points B, C, F, and E represents a region with a GWP of 1500 or less, showing ASHRAE non-flammability in which safety factors are taken into consideration, and having a compressor outlet pressure within ±2.5% of the pressure of R22. The quadrilateral surrounded by points B', C', F', and E' represents a region with a GWP of 1500 or less, showing ASHRAE non-flammability in which safety factors are taken into consideration, and having a compressor outlet pressure within ±1.25% of the pressure of R22.

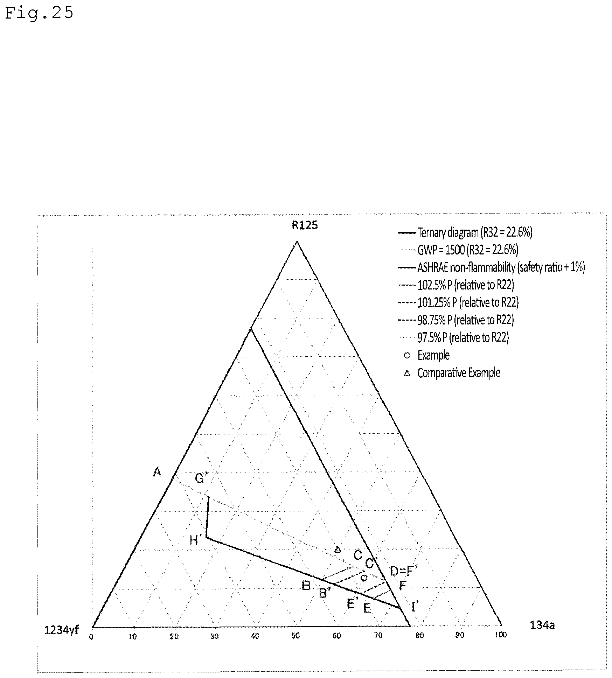

Fig. 25 shows the compositions of the above mixture (a pentagon surrounded by points B, C, D, F, and E; and a quadrilateral surrounded by points B', C', F' (= D), and E') in a ternary composition diagram of R125, 1234yf, and R134a, when the concentration of R32 is 22.6 wt% (reference, not according to the claimed invention). The pentagon surrounded by points B, C, D, F, and E represents a region with a GWP of 1500 or less, showing ASHRAE non-flammability in which safety factors are taken into consideration, and having a compressor outlet pressure within ±2.5% of the pressure of R22. The quadrilateral surrounded by points B', C', F', and E' represents a region with a GWP of 1500 or less, showing ASHRAE non-flammability in which safety factors are taken into consideration, and having a compressor outlet pressure within ±1.25% of the pressure of R22.

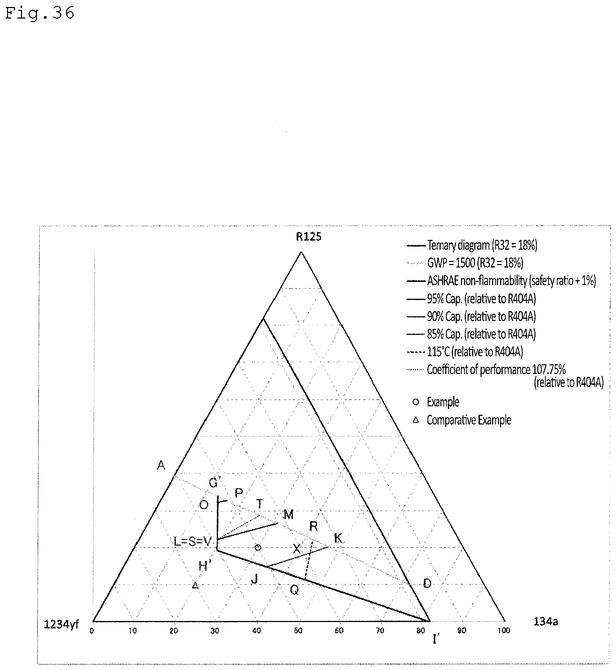

Fig. 36 shows the compositions of the above mixture (a quadrilateral surrounded by points G', H', J, and K; a hexagon surrounded by points S, T, R, X, J, and H'; a triangle surrounded by points G', L (L = S), and M; a triangle surrounded by points T, M, and V (V = L = S); and a triangle surrounded by points G', O, and P) in a ternary composition diagram of R125, 1234yf, and R134a, when the concentration of R32 is 18.0 wt% (reference, not according to the claimed invention). The quadrilateral surrounded by points G', H', J, and K represents a region with a GWP of 1500 or less, showing ASHRAE non-flammability in which safety factors are taken into consideration, and having a compressor outlet temperature of 115°C or less and a refrigerating capacity of 85% or more of that of R404A. The hexagon surrounded by points S, T, R, X, J, and H' represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 85% or more of that of R404A. The triangle surrounded by points G', L, and M represents a region with a GWP of 1500 or less, showing ASHRAE non-flammability in which safety factors are taken into consideration, and having a compressor outlet temperature of 115°C or less and a refrigerating capacity of 90% or more of that of R404A. The triangle surrounded by points T, M, and V represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 90% or more of that of R404A. The triangle surrounded by points G', O, and P represents a region with a GWP of 1500 or less, showing ASHRAE non-flammability in which safety factors are taken into consideration, and having a refrigerating capacity of 95% or more of that of R404A.

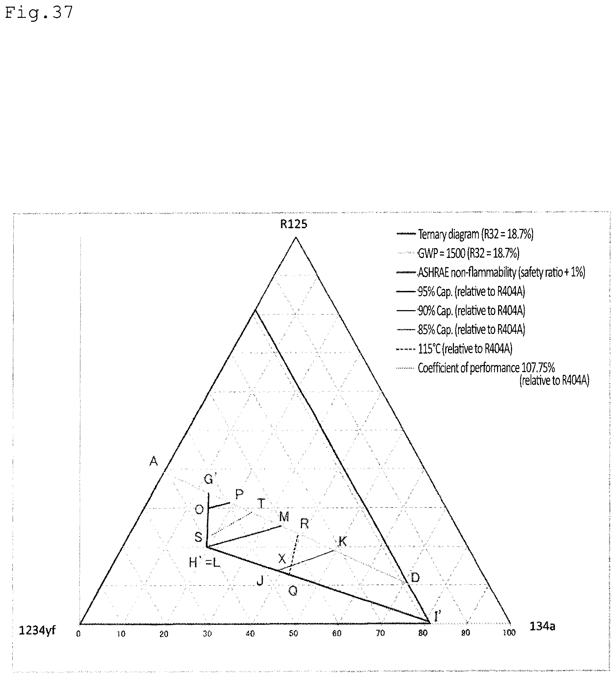

Fig. 37 shows the compositions of the above mixture (a pentagon surrounded by points G', H', J, X, and R; a hexagon surrounded by points S, T, R, X, J, and H'; a triangle surrounded by points G', L (L = H'), and M; a quadrilateral surrounded by points S, T, M, and L (L = H'); and a triangle surrounded by points G', O, and P) in a ternary composition diagram of R125, 1234yf, and R134a, when the concentration of R32 is 18.7 wt%. The pentagon surrounded by points G', H', J, X, and K represents a region with a GWP of 1500 or less, showing ASHRAE non-flammability in which safety factors are taken into consideration, and having a compressor outlet temperature of 115°C or less and a refrigerating capacity of 85% or more of that of R404A. The hexagon surrounded by points S, T, R, X, J, and H' represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 85% or more of that of R404A. The triangle surrounded by points G', L, and M represents a region with a GWP of 1500 or less, showing ASHRAE non-flammability in which safety factors are taken into consideration, and having a compressor outlet temperature of 115°C or less and a refrigerating capacity of 90% or more of that of R404A. The quadrilateral surrounded by points S, T, M, and L represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 90% or more of that of R404A. The triangle surrounded by points G', O, and P represents a region with a GWP of 1500 or less, showing ASHRAE non-flammability in which safety factors are taken into consideration, and having a refrigerating capacity of 95% or more of that of R404A.

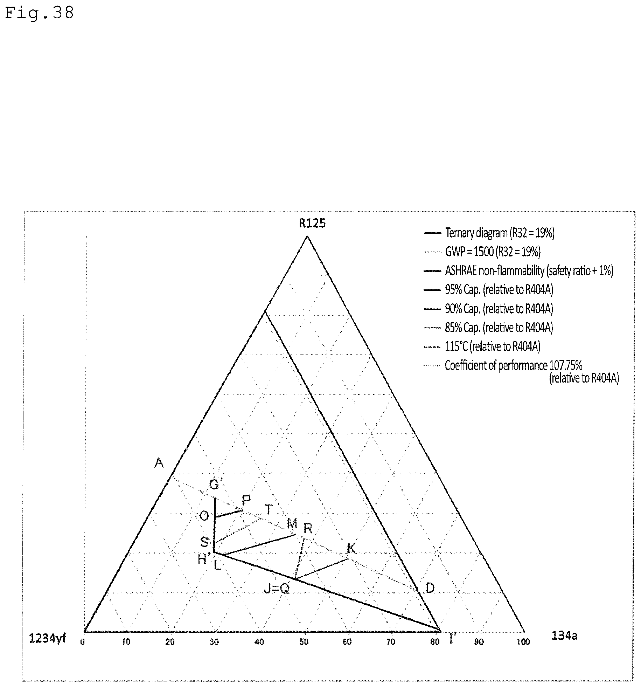

Fig. 38 shows the compositions of the above mixture (a quadrilateral surrounded by points G', H', Q (Q = J), and R; a pentagon surrounded by points S, T, R, Q (Q = J), and H'; a quadrilateral surrounded by points G', H', L, and M; a pentagon surrounded by points S, T, M, L, and H'; and a triangle surrounded by points G', O, and P) in a ternary composition diagram of R125, 1234yf, and R134a, when the concentration of R32 is 19.0 wt%. The quadrilateral surrounded by points G', H', Q, and R represents a region with a GWP of 1500 or less, showing ASHRAE non-flammability in which safety factors are taken into consideration, and having a compressor outlet temperature of 115°C or less and a refrigerating capacity of 85% or more of that of R404A. The pentagon surrounded by points S, T, R, Q, and H' represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 85% or more of that of R404A. The quadrilateral surrounded by points G', H', L, and M represents a region with a GWP of 1500 or less, showing ASHRAE non-flammability in which safety factors are taken into consideration, and having a compressor outlet temperature of 115°C or less and a refrigerating capacity of 90% or more of that of R404A. The pentagon surrounded by points S, T, M, L, and H' represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 90% or more of that of R404A. The triangle surrounded by points G', O, and P represents a region with a GWP of 1500 or less, showing ASHRAE non-flammability in which safety factors are taken into consideration, and having a refrigerating capacity of 95% or more of that of R404A.

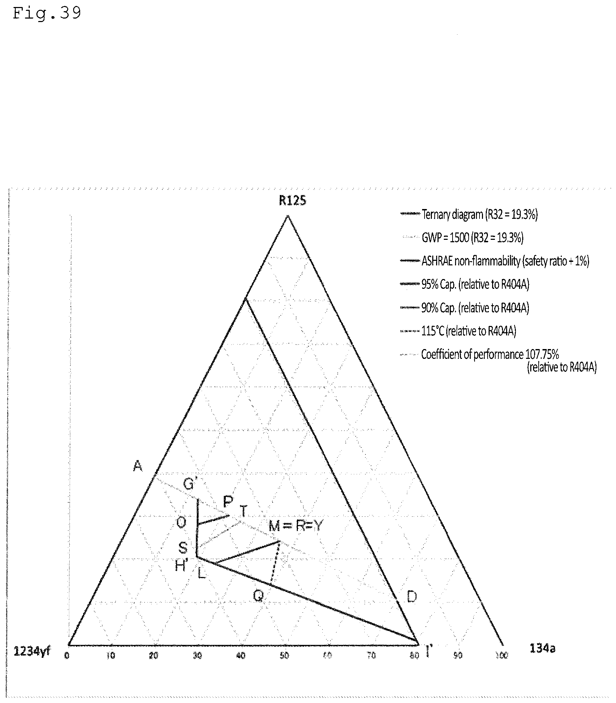

Fig. 39 shows the compositions of the above mixture (a quadrilateral surrounded by points G', H', Q, and R; a pentagon surrounded by points S, T, R, Q, and H'; a quadrilateral surrounded by points G', H', L, and M (M = R); a pentagon surrounded by points S, T, M (M = R), L, and H'; and a triangle surrounded by points G', O, and P) in a ternary composition diagram of R125, 1234yf, and R134a, when the concentration of R32 is 19.3 wt%. The quadrilateral surrounded by points G', H', Q, and R represents a region with a GWP of 1500 or less, showing ASHRAE non-flammability in which safety factors are taken into consideration, and having a compressor outlet temperature of 115°C or less and a refrigerating capacity of 85% or more of that of R404A. The pentagon surrounded by points S, T, R, Q, and H' represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 85% or more of that of R404A. The quadrilateral surrounded by points G', H', L, and M represents a region with a GWP of 1500 or less, showing ASHRAE non-flammability in which safety factors are taken into consideration, and having a compressor outlet temperature of 115°C or less and a refrigerating capacity of 90% or more of that of R404A. The pentagon surrounded by points S, T, M, L, and H' represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 90% or more of that of R404A. The triangle surrounded by points G', O, and P represents a region with a GWP of 1500 or less, showing ASHRAE non-flammability in which safety factors are taken into consideration, and having a refrigerating capacity of 95% or more of that of R404A.

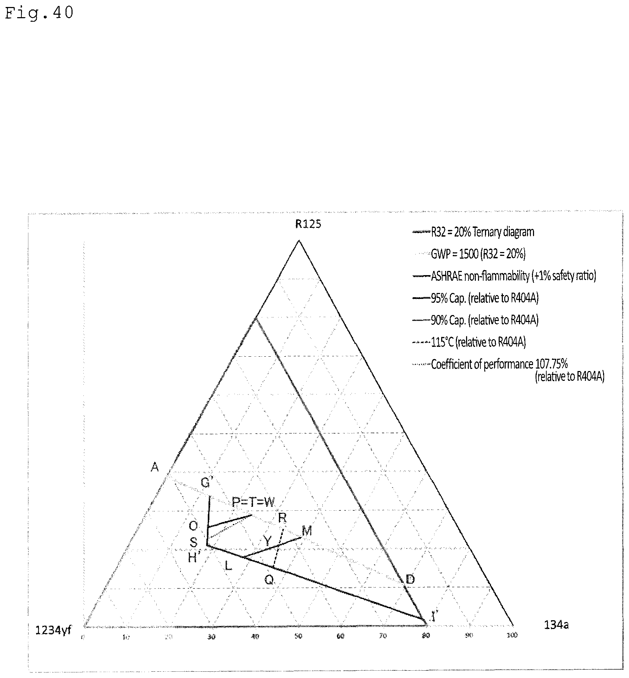

Fig. 40 shows the compositions of the above mixture (a quadrilateral surrounded by points G', H', Q, and R; a pentagon surrounded by points S, T, R, Q, and H'; a pentagon surrounded by points G', H', L, Y, and R; a hexagon surrounded by points S, T, R, Y, L, and H'; and a triangle surrounded by points G', O, and P (P = T = W)) in a ternary composition diagram of R125, 1234yf, and R134a, when the concentration of R32 is 20.0 wt% (upper limit value not covered by the claims). The quadrilateral surrounded by points G', H', Q, and R represents a region with a GWP of 1500 or less, showing ASHRAE non-flammability in which safety factors are taken into consideration, and having a compressor outlet temperature of 115°C or less and a refrigerating capacity of 85% or more of that of R404A. The pentagon surrounded by points S, T, R, Q, and H' represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 85% or more of that of R404A. The pentagon surrounded by points G', H', L, Y, and M represents a region with a GWP of 1500 or less, showing ASHRAE non-flammability in which safety factors are taken into consideration, and having a compressor outlet temperature of 115°C or less and a refrigerating capacity of 90% or more of that of R404A. The hexagon surrounded by points S, T, R, Y, L, and H' represents a region with a GWP of 1500 or less, showing ASHRAE non-flammability in which safety factors are taken into consideration, and having a compressor outlet temperature of 115°C or less, a COP of 107.75% or more of that of R404A, and a refrigerating capacity of 90% or more of that of R404A. The triangle surrounded by points G', O, and P represents a region with a GWP of 1500 or less, showing ASHRAE non-flammability in which safety factors are taken into consideration, and having a refrigerating capacity of 95% or more of that of R404A.

## Description of Embodiments

The present invention is described in detail below. Hereinafter, "x2" in the explanation of each point and the explanation of approximate expressions represents "$x^2$."

## Composition

The composition used in the present invention (hereinafter also referred to as "the present composition" ) is a composition comprising a mixture of fluorinated hydrocarbons, the mixture comprising difluoromethane (R32), pentafluoroethane (R125), 2,3,3,3-tetrafluoropropene (1234yf), and 1,1,1,2-tetrafluoroethane (R134a) at specific concentrations.
The present composition has a GWP of 1500 or less and ASHRAE non-flammability performance.

Because the GWP is 1500 or less, the present composition can notably reduce the burden on the environment from a global warming perspective, compared with other general-purpose refrigerants. Moreover, since the composition of the present invention is non-flammable according to ASHRAE, it is safer than flammable refrigerants, and can be used in a wide range of applications.

The present composition preferably has refrigerating capacity equal to that of R404A. Specifically, the refrigerating capacity relative to that of R404A is preferably 85% or more, more preferably 90% or more, even more preferably 95% or more, and particularly preferably 100% or more. R404A is a refrigerant currently widely used as a refrigerant for freezing and refrigerated storage. The present composition can be an alternative refrigerant for R404A.

The compressor outlet temperature of the present composition in a refrigeration cycle is preferably 130°C or less, more preferably 120°C or less, and particularly preferably 115°C or less, in terms of preventing deterioration of the refrigerant oil.

In the present composition, the ratio of refrigerating capacity to power consumed in a refrigeration cycle (coefficient of performance (COP)) is preferably high. Specifically, the COP is preferably 95 or more, more preferably 100 or more, and particularly preferably 107.75 or more.

In the present composition, the compressor outlet pressure in a refrigeration cycle is preferably equal to that of R22 (R22 retrofit). R22 was widely used as a refrigerant for freezing and refrigerated storage before the spread of R404A. Many refrigerating devices using R22 as a refrigerant still remain. However, R22 will be abolished in developed countries in 2020 due to the regulation of HCFC, and there is thus a strong demand for alternative refrigerants. It is essential for alternative refrigerants for refrigerating devices using R22 that the compressor outlet pressure, which is the maximum pressure in a refrigeration cycle, is equal to that of R22. The compressor outlet pressure is within +1.25%, of that of R22.

In the present composition, the mixture may consist of the four basic components, i.e., difluoromethane (R32), pentafluoroethane (R125), 2,3,3,3-tetrafluoropropene (1234yf), and 1,1,1,2-tetrafluoroethane (R134a), or may comprise, in addition to the four basic components, components different from the four basic components (hereinafter referred to as "other components"). These are referred to as the "four basic components" and "other components" below. The details of the other components are described later. The present composition may consist of the above mixture, or may comprise any additives, such as refrigerant oil, described later, in addition to the mixture.

When the mixture comprises other components, the other components are preferably contained in amounts that do not inhibit the function of the four basic components. From this viewpoint, the content of other components in the mixture is 0.5 wt% or less, preferably 0.3 wt% or less, and particularly preferably 0.1 wt% or less.

Mixture of Fluorinated Hydrocarbons

The mixture of fluorinated hydrocarbons used in the present invention comprises difluoromethane (R32), pentafluoroethane (R125), 1,1,1,2-tetrafluoroethane (R134a), and 2,3,3,3-tetrafluoropropene (1234yf).

More precisely, the present composition comprises the following mixture having a composition ratio indicated in a ternary composition diagram in which the sum of the concentrations of R125, 1234yf, and R134a is represented by (100-x) wt%, when the sum of the concentrations of R32, R125, 1234yf, and R134a is 100 wt%, and the concentration of R32 is x wt%:

the mixture having a composition ratio in which

(1) 20.0 wt% > x ≥ 18.1 wt%, and
(2) the concentrations of R125, 1234yf, and 134a (R125 concentration (wt%)/1234yf concentration (wt%)/134a concentration (wt%)) fall within a quadrilateral having the following points as vertices:

point B' (-1.0442x+33.87/0.2539x2-14.531x+212.38/100-R32-1234yf-R134a),
point C' (-1.3145x+43.588/-2.4717x+59.031/100-R32-1234yf-R134a), point F' (-1.258x+39.651/0.0607x2-4.7348x+75.905/100-R32-1234yf-R134a), and
point E' (-0.8869x+28.126/0.1994x2-11.991x+177.97/100-R32-1234yf-R134a).

Such a mixture is preferable in terms of reducing GWP, ensuring ASHRAE non-flammability performance (in which safety factors are further taken into consideration), and obtaining a compressor outlet pressure equal to that of R22 (R22 retrofit).

The ASHRAE flammability classification of refrigerants is now described.

The ASHRAE flammability classification of refrigerants is performed based on ANSI/ASHRAE Standard 34-2013. Refrigerants classified as Class 1 are non-flammable refrigerants. That is, the present composition being non-flammable according to ASHRAE means that the mixture of fluorinated hydrocarbons used in the present invention (in particular, the four basic components) is classified as Class 1 in flammability classification.

More specifically, a leak test during storage, shipping, and use is performed based on ANSI/ASHRAE 34-2013 to specify the worst case of fractionation for flammability (WCFF). When the WCFF composition can be identified as being non-flammable in a test based on ASTM E681-2009 (a standard test method for concentration limits of flammability of chemicals (vapors and gases)), it is classified as Class 1.

The following shows a case (not covered by the claimed invention) in which the sum of the concentrations of R32, R125, 1234yf, and R134a is 100 wt%, and the concentration of R32 is 22.6 wt%, and explains a method for specifying ASHRAE non-flammability limits in a ternary composition diagram in which the sum of the concentrations of R125, 1234yf, and R134a is 77.4 wt%.

To specify ASHRAE non-flammability limits in the ternary composition diagram, it is first necessary to determine the non-flammability limits of a binary mixed refrigerant of a flammable refrigerant (R32 or 1234yf) and a non-flammable refrigerant (R134a or R125). The non-flammability limits of the binary mixed refrigerant were determined in Experimental Example 1.

Experimental Example 1 (Non-Flammability Limits of Binary Mixed Refrigerant of Flammable Refrigerant (R32 or 1234yf) and NonFlammable Refrigerant (R134a or R125))

The non-flammability limits of the binary mixed refrigerant were determined based on the measuring apparatus and measuring method of a flammability test according to ASTM E681-2009.

Specifically, a 12-L spherical glass flask was used so that the combustion state could be visually observed and photographically recorded. When excessive pressure was generated by combustion in the glass flask, gas was allowed to escape from the upper lid. Ignition was achieved by electric discharge from electrodes disposed at one-third the distance from the bottom. The test conditions are as follows.

Test conditions

Test vessel: 280 mm φ spherical (internal volume: 12 liters)
Test temperature: 60°C ±3°C
Pressure: 101.3 kPa ±0.7 kPa
Water: 0.0088 g ±0.0005 g per gram of dry air
Mixing ratio of binary refrigerant composition/air: 1 vol.% increments ±0.2 vol.%
Binary refrigerant composition mixture: ±0.1 wt%
Ignition method: AC discharge, voltage: 15 kV, electric current: 30 mA, neon transformer
Electrode spacing: 6.4 mm (1/4 inch)
Spark: 0.4 seconds ±0.05 seconds

Evaluation criteria:

- When the flame propagation extended at an angle of 90° or more from the ignition point, it was evaluated as flammable (propagation).
- When the flame propagation extended at an angle of less than 90° from the ignition point, it was evaluated as non-flammable (no flame propagation).

As a result, in the mixed refrigerant of flammable refrigerant R32 and non-flammable refrigerant R134a, no flame propagation was observed from R32 = 43.0 wt% and R134a = 57.0 wt%. These compositions were regarded as non-flammability limits. Moreover, in the case of flammable refrigerant R32 and nonflammable refrigerant R125, no flame propagation was observed from R32 = 63.0 wt% and R125 = 37.0 wt%; in the case of flammable refrigerant 1234yf and non-flammable refrigerant R134a, no flame propagation was observed from 1234yf = 62.0 wt% and R134a = 38.0 wt%; and in the case of flammable refrigerant 1234yf and nonflammable refrigerant R125, no flame propagation was observed from 1234yf = 79.0 wt% and R125 = 21.0 wt%. These compositions were regarded as non-flammability limits. The results are summarized in Table 1.

Table 1

| Item | Flammable refrigerants | Non-flammable refrigerant |
|---|---|---|
| Binary mixed refrigerant combination | R32 | R134a |
| Non-flammability limit (wt%) | 43.0 | 57.0 |
| Binary mixed refrigerant combination | R32 | R125 |
| Non-flammability limit (wt%) | 63.0 | 37.0 |
| Binary mixed refrigerant combination | 1234yf | R134a |
| Non-flammability limit (wt%) | 62.0 | 38.0 |
| Binary mixed refrigerant combination | 1234yf | R125 |
| Non-flammability limit (wt%) | 79.0 | 21.0 |

Next, based on the non-flammability limits of the binary mixed refrigerants determined in Experimental Example 1, ASHRAE non-flammability limits when R32 = 22.6% were determined in the following manner.

<u>1) Case in Which R32 = 22.6 wt% and 1234yf = 0 wt%</u>

When R125 + R134a = 77.4 wt%, WCFF compositions in mixture compositions close to the ASHRAE non-flammability limits were calculated by REFPROP 9.0. Table 2-1 shows the results. Moreover, whether the calculated WCFF composition was a non-flammability limit composition was examined in the following manner.

(1) Non-flammability limit R134a concentration (wt%) relative to 1234yf concentration of WCFF = 1234yf of WCFF (wt%) x 38/62 = 0

(2) Excess R134a concentration (wt%) = R134a concentration of WCFF (wt%) - (1)

(3) Non-flammability limit R32 concentration (wt%) relative to R125 concentration of WCFF = R125 concentration of WCFF composition (wt%) x 63/37

(4) Non-flammability limit R134a concentration relative to R32 concentration of (R32 concentration of WCFF - (3)) = (R32 concentration of WCFF - (3)) x 57/43

The composition that satisfied (2)-(4) > 0 was regarded as a calculation ASHRAE non-flammability limit.

Table 2-1

| Item | R32 (wt%) | R125 (wt%) | 1234yf (wt%) | R134a (wt%) | (2) | (4) | (2)-(4) | Calculation WCFF |
|---|---|---|---|---|---|---|---|---|
| Composition | 22.6 | 2.6 | 0 | 74.8 | | | | Storage (storage condition) / shipping (shipping condition) |
| WCFF | 45.6 | 4.8 | 0 | 49.6 | 49.60 | 49.61 | -0.01 | |
| Composition | 22.6 | 2.7 | 0 | 74.7 | | | | |
| WCFF | 45.6 | 4.9 | 0 | 49.5 | 49.50 | 49.39 | 0.11 | Boiling point + 10°C Vapor phase initial leak |
| Composition | 22.6 | 2.8 | 0 | 74.6 | | | | |
| WCFF | 45.6 | 5.1 | 0 | 49.3 | 49.30 | 48.94 | 0.36 | |

2) Case in Which R32 = 22.6 wt% and R134a = 50.0 wt% (R32/R125 ≤ 1.70)

When R125 + 1234yf = 27.4 wt%, WCFF compositions in mixture compositions close to the ASHRAE non-flammability limits were calculated by REFPROP 9.0. Table 2-2 shows the results. Moreover, whether the calculated WCFF composition was a non-flammability limit composition was examined in the following manner.

```
(1) Non-flammability limit R134a concentration (wt%) relative to
1234yf concentration of WCFF = 1234yf of WCFF (wt%) x 38/62

 (2) Excess R134a concentration (wt%) = R134a concentration of
 WCFF (wt%) - (1)

 (3) Non-flammability limit R32 concentration (wt%) relative to
 R125 concentration of WCFF = R125 concentration of WCFF
 composition (wt%) x 63/37

 (4) Non-flammability limit R134a concentration relative to R32
 concentration of (R32 concentration of WCFF - (3)) = (R32
 concentration of WCFF - (3)) x 57/43
```

The composition that satisfied (2)-(4) > 0 was regarded as a calculation ASHRAE non-flammability limit.

Table 2-2

| Item | R32 (wt%) | R125 (wt%) | 1234yf (wt%) | R134a (wt%) | (2) | (4) | (2)-(4) | Calculation WCFF |
|---|---|---|---|---|---|---|---|---|
| Composition WCFF | 22.6 41.7 | 10.8 16.1 | 16.6 14.5 | 50.0 27.7 | 18.81 | 18.94 | -0.12 | Storage (storage condition) / shipping (shipping condition) |
| Composition WCFF | 22.6 41.7 | 10.9 16.2 | 16.5 14.4 | 50.0 27.7 | 18.87 | 18.71 | 0.16 | Boiling point + 10°C Vapor phase initial leak |
| Composition WCFF | 22.6 41.6 | 11.0 16.4 | 16.4 14.3 | 50.0 27.7 | 18.94 | 18.13 | 0.81 | |

3) Case in Which R32 = 22.6 wt% and R134a = 20.0 wt% (R32/R125 ≤ 1.70)

When R125 + 1234yf = 57.4 wt%, WCFF compositions in mixture compositions close to the ASHRAE non-flammability limits were calculated by REFPROP 9.0. Table 2-3 shows the results. Moreover, whether the calculated WCFF composition was a non-flammability limit composition was examined in the following manner.

```
(1) Non-flammability limit R134a concentration (wt%) relative to
1234yf concentration of WCFF = 1234yf of WCFF (wt%) x 38/62

 (2) Excess R134a concentration (wt%) = R134a concentration of
 WCFF (wt%) - (1)
```

(3) Non-flammability limit R32 concentration (wt%) relative to R125 concentration of WCFF = R125 concentration of WCFF composition (wt%) x 63/37

(4) Non-flammability limit R134a concentration relative to R32 concentration of (R32 concentration of WCFF - (3)) = (R32 concentration of WCFF - (3)) x 57/43

The composition that satisfied (2)-(4) > 0 was regarded as a calculation ASHRAE non-flammability limit.

Table 2-3

| Item | R32 (wt%) | R125 (wt%) | 1234yf (wt%) | R134a (wt%) | (2) | (4) | (2)-(4) | Calculation WCFF |
|---|---|---|---|---|---|---|---|---|
| Composition WCFF | 22.6 39.8 | 20.6 25.7 | 36.8 24.9 | 20.0 9.6 | 2.325 | 2.455 | -0.130 | Storage (storage condition) / shipping (shipping condition) |
| Composition WCFF | 22.6 39.7 | 20.7 25.8 | 36.7 24.9 | 20.0 9.6 | 2.484 | 2.455 | 0.029 | |
| Composition WCFF | 22.6 39.7 | 20.8 25.9 | 36.6 24.8 | 20.0 9.6 | 2.584 | 2.429 | 0.155 | Boiling point + 10°C Vapor phase initial leak |

4) R32 = 22.6%, R134a = 15.9% (Calculation WCFF Change Point)

When R125 + R134a = 61.5 wt%, WCFF compositions in mixture compositions close to the ASHRAE non-flammability limits were calculated by REFPROP 9.0. Table 2-4 shows the results. Moreover, whether the calculated WCFF composition was a non-flammability limit composition was examined in the following manner.

(1) R125 non-flammability limit concentration (wt%) relative to R32 concentration of WCFF = R32 of WCFF (wt%) x 37/63

(2) Excess R125 concentration (wt%) = R125 concentration of WCFF (wt%) - (1)

(3) Non-flammability limit 1234yf concentration (wt%) relative to R134a of WCFF = 134a concentration of WCFF composition (wt%) x 62/38

(4) R125 non-flammability limit concentration relative to 1234yf concentration of (1234yf concentration of WCFF - (3)) = (1234 concentration of WCFF - (3)) x 21/79

The composition that satisfied (2)-(4) > 0 was regarded as a calculation ASHRAE non-flammability limit.

Table 2-4

| Item | R32 (wt%) | R125 (wt%) | 1234yf (wt%) | R134a (wt%) | (2) | (4) | (2)-(4) | Calculation WCFF |
|---|---|---|---|---|---|---|---|---|
| Composition | 22.6 | 22.0 | 39.5 | 15.9 | | | | Storage (storage condition) / shipping (shipping condition) |
| WCFF | 39.6 | 26.9 | 26.0 | 7.5 | 3.64 | 3.66 | -0.02 | |
| Composition | 22.6 | 22.1 | 39.4 | 15.9 | | | | |
| WCFF | 39.6 | 27.0 | 25.9 | 7.5 | 3.74 | 3.63 | 0.11 | Boiling point + 10°C Vapor phase initial leak |
| Composition | 22.6 | 22.2 | 39.3 | 15.9 | | | | |
| WCFF | 39.6 | 27.1 | 25.8 | 7.5 | 3.84 | 3.61 | 0.24 | |

The above calculation WCFF being a change point was confirmed by calculating the WCFF composition from the liquid phase side by REFPROP 9.0 when R134a = 15.8, 15.9, and 16.0 wt%. Table 2-5 shows the results. Moreover, whether the determined WCFF composition was a non-flammability limit composition was examined in the following manner.

```
(1) R125 non-flammability limit concentration (wt%) relative to
R32 concentration of WCFF = R32 of WCFF (wt%) x 37/63

(2) Excess R125 concentration (wt%) = R125 concentration of WCFF
(wt%) - (1)

(3) Non-flammability limit 1234yf concentration (wt%) relative to
R134a of WCFF = 134a concentration of WCFF composition (wt%) x
62/38

(4) R125 non-flammability limit concentration relative to 1234yf
concentration of (1234yf concentration of WCFF - (3)) = (1234
concentration of WCFF - (3)) x 21/79
```

The composition that satisfied (2)-(4) > 0 was regarded as a calculation ASHRAE non-flammability limit.

Table 2-5

| Item | R32 (wt%) | R125 (wt%) | 1234yf (wt%) | R134a (wt%) | (2) | (4) | (2)-(4) | Calculation WCFF |
|---|---|---|---|---|---|---|---|---|
| Composition | 22.6 | 22.1 | 39.5 | 15.8 | | | | Storage (storage condition) / shipping (shipping condition) |
| WCFF | 0.8 | 4.5 | 64.7 | 30.0 | 4.03 | 4.19 | -0.16 | |
| Composition | 22.6 | 22.1 | 39.4 | 15.9 | | | | |
| WCFF | 0.8 | 4.5 | 64.4 | 30.3 | 4.03 | 3.98 | 0.05 | 0°C |
| Composition | 22.6 | 22.1 | 39.3 | 16.0 | | | | |
| WCFF | 0.8 | 4.5 | 64.2 | 30.5 | 4.03 | 3.84 | 0.19 | Liquid phase 95% leak |

The above results show that WCFF was vapor phase initial leak when R134a ≥ 16.0 wt%, and liquid phase 95% leak when R134a ≤ 15.8 wt%. Thus, R134a = 15.9 wt% is a change point of the WCFF composition.

5) ASHRAE Non-Flammability Limit When R32 = 22.6 and R125 = 25.0%

When 1234yf + R134a = 52.4 wt%, WCFF compositions in mixture compositions close to the ASHRAE non-flammability limit were calculated by REFPROP 9.0. Table 2-6 shows the results. WCFF was liquid phase 95% leak because R134a ≤ 15.8 wt%. Moreover, whether the calculated WCFF composition was a non-flammability limit composition was examined in the following manner.

```
(1) R125 non-flammability limit concentration (wt%) relative to
R32 concentration of WCFF = R32 of WCFF (wt%) x 37/63

(2) Excess R125 concentration (wt%) = R125 concentration of WCFF
(wt%) - (1)

(3) Non-flammability limit 1234yf concentration (wt%) relative to
R134a of WCFF = 134a concentration of WCFF composition (wt%) x
62/38

(4) R125 non-flammability limit concentration relative to 1234yf
concentration of (1234yf concentration of WCFF - (3)) = (1234
concentration of WCFF - (3)) x 21/79
```

The composition that satisfied (2)-(4) > 0 was regarded as a calculation ASHRAE non-flammability limit.

Table 2-6

| Item | R32 (wt%) | R125 (wt%) | 1234yf (wt%) | R134a (wt%) | (2) | (4) | (2)-(4) | Calculation WCFF |
|---|---|---|---|---|---|---|---|---|
| Composition WCFF | 22.6 0.5 | 25.0 4.5 | 38.1 65.2 | 14.3 29.8 | 4.21 | 4.41 | -0.20 | Storage (storage condition) / shipping (shipping condition) |
| Composition WCFF | 22.6 0.5 | 25.0 4.5 | 38.0 64.9 | 14.4 30.1 | 4.21 | 4.20 | 0.01 | -10°C |
| Composition WCFF | 22.6 0.5 | 25.0 4.5 | 37.9 64.7 | 14.5 30.3 | 4.21 | 4.06 | 0.15 | Liquid phase 95% leak |
| Composition WCFF | 22.6 39.4 | 24.9 29.1 | 45.4 28.2 | 7.1 3.3 | 5.96 | 6.06 | -0.10 | Storage (storage condition) / shipping (shipping condition) |
| Composition WCFF | 22.6 39.4 | 25.0 29.2 | 45.3 28.1 | 7.1 3.3 | 6.06 | 6.04 | 0.02 | Boiling point + 10°C |
| Composition WCFF | 22.6 39.4 | 25.1 29.3 | 45.2 28.0 | 7.1 3.3 | 6.16 | 6.01 | 0.15 | Vapor phase initial leak |

6) ASHRAE Non-Flammability Limit When GWP = 1500

The WCFF composition of a composition in which GWP was 1500 (22.6/34.2/32.8/10.4) (R32 concentration (wt%)/R125 concentration (wt%)/1234yf concentration (wt%)/R134a concentration (wt%)), and WCFF compositions in mixture compositions close to the ASHRAE non-flammability limits were calculated by REFPROP 9.0. Table 2-7 shows the results. Moreover, whether the calculated WCFF composition was a non-flammability limit composition was examined in the following manner.

```
(1) R125 non-flammability limit concentration (wt%) relative to
R32 concentration of WCFF = R32 of WCFF (wt%) x 37/63
```

(2) Excess R125 concentration (wt%) = R125 concentration of WCFF (wt%) - (1)

(3) Non-flammability limit 1234yf concentration (wt%) relative to R134a of WCFF = 134a concentration of WCFF composition (wt%) x 62/38

(4) R125 non-flammability limit concentration relative to 1234yf concentration of (1234yf concentration of WCFF - (3)) = (1234 concentration of WCFF - (3)) x 21/79

The composition that satisfied (2)-(4) > 0 was regarded as a calculation ASHRAE non-flammability limit.

Table 2-7

| Item | R32 (wt%) | R125 (wt%) | 1234yf (wt%) | R134a (wt%) | (2) | (4) | (2)-(4) | Calculation WCFF |
|---|---|---|---|---|---|---|---|---|
| Composition WCFF | 22.6 0.2 | 34.2 5.4 | 32.9 66.2 | 10.3 28.2 | 5.28 | 5.37 | -0.08 | Storage (storage condition) / shipping (shipping condition) |
| Composition WCFF | 22.6 0.2 | 34.2 5.4 | 32.8 65.8 | 10.4 28.6 | 5.28 | 5.09 | 0.20 | -32°C |
| Composition WCFF | 22.6 0.2 | 34.2 5.4 | 32.7 65.5 | 10.5 28.9 | 5.28 | 4.88 | 0.41 | Liquid phase 95% leak |

The results of examining the above calculation ASHRAE non-flammability limit compositions are shown in a ternary composition diagram. The results of determining regression lines connecting these points are a straight line connecting points G and H, and a straight line connecting points H and I shown in Fig. 1.

Experimental Example 2 (Examination of Calculation Non-Flammability Limits Obtained in Experimental Example 1 by Combustion Test)

A combustion test was carried out according to ASTM E681 shown in Experimental Example 1 using, as representative examples, the WCFF composition (41.7/16.2/14.4/27.7) of the composition (R32/R125/1234yf/R134a) = (22.6/10.9/16.5/50.0), and the WCFF composition (0.2/5.4/65.8/28.6) of the composition (R32/R125/1234yf/R134a) = (22.6/34.2/32.8/10.4). As a result, flame propagation was not observed in these WCFF compositions.

Therefore, the ASHRAE non-flammability limits determined by calculation in Experimental Example 1 based on the non-flammability limits of the binary compositions determined in Experimental Example 1 satisfy the requirements for ASHRAE non-flammability based on ANSI/ASHRAE Standard 34-2013.

Moreover, as shown in Fig. 1 (a ternary diagram when R32 = 22.6%), the ASHRAE non-flammability limit with a GWP of 1500 or less is represented by a straight line (line HI) connecting 1234yf = 0 wt% (the point determined by method 1) above; point I in Fig. 1) and R32 = 30%, R134a = 10.3% (calculation WCFF change point) (the point determined by method 4) above; point H in Fig. 1), and a straight line (line GH) connecting point H and GWP = 1500 (the point determined by method 6) above; point G in Fig. 1).

Hereinafter, the ASHRAE non-flammability limits in the present specification are represented by regression lines (line HI and line GH) determined by methods 1), 4), and 6) above based on the non-flammability limits of the binary compositions determined in Experimental Example 1. Table 2-8 shows the R32 concentration, R125 concentration, 1234yf concentration, and R134a concentration of point G, point H, and point I when the R32 concentration is 18.1, 19.0, 20.0 (not claimed)and 22.6 (not claimed) wt%.

Table 2-8

| R32 (wt%) | Point G | | | Point H | | | Point I | | |
|---|---|---|---|---|---|---|---|---|---|
| | R125 (wt%) | 1234yf (wt%) | R134a (wt%) | R125 (wt%) | 1234yf (wt%) | R134a (wt%) | R125 (wt%) | 1234yf (wt%) | R134a (wt%) |
| 18.1 | 34.3 | 35.3 | 12.3 | 18.3 | 43.5 | 20.1 | 0.0 | 3.9 | 78.0 |
| 19.0 | 34.3 | 34.8 | 11.9 | 19.2 | 42.7 | 19.1 | 0.0 | 2.0 | 79.0 |
| 20.0 | 34.2 | 34.3 | 11.5 | 20.1 | 41.8 | 18.1 | 0.0 | 0.0 | 80.0 |
| 22.6 | 34.2 | 32.8 | 10.4 | 22.1 | 39.4 | 15.9 | 2.7 | 0.0 | 74.7 |

In the ASHRAE non-flammability limits determined by calculation as described above, safety factors are preferably further taken into consideration, in view of the purity of each refrigerant during production, error during mixing, etc. ASHRAE non-flammability limit line GH was moved in parallel so that the concentration of non-flammable refrigerant R134a was higher by 1 wt% (because $\pm$1 wt% is often expected as the allowable concentration during production), by reducing the 1234yf concentration by 1.63 wt% (63/37) based on the non-flammability limit mixing ratio of R134a and 1234yf. Thus, line segment G'H' in which safety factors were taken into consideration was obtained. Moreover, ASHRAE non-flammability limit line HI was moved in parallel so that the concentration of non-flammable refrigerant R125 was higher by 1 wt% (because $\pm$1 wt% is often expected as the allowable concentration during production), by reducing the 1234yf concentration by 3.76 wt% (79/21) based on the non-flammability limit mixing ratio of R134a and 1234yf. Thus, line segment H'I' in which safety factors were taken into consideration was obtained.

Regarding ASHRAE non-flammability lines G'H'I' in which safety factors are taken into consideration, for example, in the case of R32 = 22.6 wt%, when R125 = y wt%, 1234yf = z wt%, and R134a = w wt%, line segment GH was represented by $z = 1.2w + 42.92$ in a ternary diagram in which $y + z + w = 100$ wt%; thus, 1.63 was subtracted from 42.92, line segment G'H' was represented by $z = 1.2w + 41.29$, and the intersection of line segment G'H' and line segment AD was regarded as G'. Line segment HI was represented by $z = 2.0309y + 17.116$; thus, 3.76 was subtracted from 17.116, line segment H'I' was represented by $z = 2.0309y + 13.356$, and the intersection of line segment H'I' and line segment DI was regarded as I'. Moreover, H' was determined as an intersection of line segment G'H' represented by the formula $z = 1.2w + 41.29$, and line segment H'I' represented by the formula $z = 2.0309y + 13.356$.

Table 2-9 shows ASHRAE non-flammability points G', H', and I' in which safety factors were taken into consideration in the above manner.

Table 2-9

| R32 (wt%) | Point G' | | | Point H' | | | Point I' | | |
|---|---|---|---|---|---|---|---|---|---|
| | R125 (wt%) | 1234yf (wt%) | R134a (wt%) | R125 (wt%) | 1234yf (wt%) | R134a (wt%) | R125 (wt%) | 1234yf (wt%) | R134a (wt%) |
| 18.1 | 33.9 | 34.7 | 13.3 | 19.4 | 42.1 | 20.4 | 0.0 | 0.0 | 81.9 |
| 19.0 | 33.8 | 34.3 | 12.9 | 20.3 | 41.3 | 19.3 | 0.8 | 0.0 | 80.2 |
| 20.0 | 33.8 | 33.7 | 12.5 | 21.2 | 40.4 | 18.4 | 1.8 | 0.0 | 78.2 |
| 22.6 | 33.8 | 32.3 | 11.3 | 23.3 | 38.0 | 16.1 | 4.6 | 0.0 | 72.8 |

The composition ratio of R32, R125, 1234yf, and R134a contained in the mixture can be represented by points in a ternary composition diagram of R125, 1234yf, and R134a under the restriction by the condition of R32 concentration.

Specifically, when the concentration of R32 is x wt%, the sum of the concentrations of R125, 1234yf, and R134a is (100-x) wt%; and the composition ratio of R32, R125, 1234yf, and R134a contained in the mixture can be represented by coordinate points in a ternary composition diagram in which the sum of the concentrations of R125, 1234yf, and R134a is (100-x). The following shows a specific method for determining the coordinate points.

Hereinafter, cases were classified according to the range of x. The meaning of each of points A, B, C, D, E, F, B', C', E', F', G, H, I, G', H', I', J, K, L, M, N, O, P, Q, R, S, T, V, and X, Y, is as described below. The concentration of each point is determined in Example 1, described later, and the determined values are shown.

A: Composition ratio in which GWP = 1500 and the concentration (wt%) of R134a is 0 wt%

D: Composition ratio in which GWP = 1500 and the concentration (wt%) of 1234yf is 0 wt%

G: Composition ratio in which GWP = 1500 and which shows an ASHRAE non-flammability limit (when the WCFF becomes a liquid phase composition after 95% leak under the storage/shipping conditions)

H: Composition ratio showing an ASHRAE non-flammability limit (when the WCFF becomes a liquid phase composition after 95% leak under the storage/shipping conditions, and becomes a vapor phase composition at the time of 0% leak)

I: Composition ratio showing an ASHRAE non-flammability limit, in which the concentration (wt%) of 1234yf is 0 wt% (the WCFF is a vapor phase composition at the time of 0% leak under the storage/shipping conditions)

G': Composition ratio showing an intersection of a line segment in which GWP = 1500 and a line segment obtained by adding 1 wt% of non-flammable refrigerant R134a to line segment GH, which shows an ASHRAE non-flammability limit, in order to take into consideration safety factors of non-flammability

H': Composition ratio showing an intersection of a line segment obtained by adding 1 wt% of non-flammable refrigerant R134a to line segment GH, which shows an ASHRAE non-flammability limit, and a line segment obtained by adding 1 wt% of non-flammable refrigerant R125 to line segment HI

I': Composition ratio on a line segment obtained by adding 1 wt% of non-flammable refrigerant R125 to line segment HI, which shows an ASHRAE non-flammability limit, in order to take into consideration safety factors of non-flammability, in which the concentration (wt%) of 1234yf is 0 wt%

B: Composition ratio present on line segments G'H'I', in which the compressor outlet pressure is 102.5% of the R22 pressure

C: Composition ratio in which GWP = 1500 and the compressor outlet pressure is 102.5% of the R22 pressure

E: Composition ratio present on line segments G'H'I', in which the compressor outlet pressure is 97.5% of the R22 pressure

F: Composition ratio in which GWP = 1500 and the compressor outlet pressure is 97.5% of the R22 pressure

B': Composition ratio present on line segments G'H'I', in which the compressor outlet pressure is 101.25% of the R22 pressure

C': Composition ratio in which GWP = 1500 and the compressor outlet pressure is 101.25% of the R22 pressure

E': Composition ratio present on line segments G'H'I', in which the compressor outlet pressure is 98.75% of the R22 pressure

F': Composition ratio in which GWP = 1500 and the compressor outlet pressure is 98.75% of the R22 pressure

J: Composition ratio present on line segments G'H'I', in which the refrigerating capacity relative to that of R404 is 85%

K: Composition ratio in which GWP = 1500 and the refrigerating capacity relative to that of R404 is 85%

L: Composition ratio present on line segments G'H'I', in which the refrigerating capacity relative to that of R404 is 90%

M: Composition ratio in which GWP = 1500 and the refrigerating capacity relative to that of R404 is 90%

O: Composition ratio present on line segments G'H'I', in which the refrigerating capacity relative to that of R404 is 95%

P: Composition ratio in which GWP = 1500 and the refrigerating capacity relative to that of R404 is 95%

Q: Composition ratio present on line segments G'H'I', in which the compressor outlet temperature is 115°C

R: Composition ratio in which GWP = 1500 and the compressor outlet temperature is 115°C

S: Composition ratio present on line segments G'H'I', in which COP is 107.75% of that of R404A

T: Composition ratio in which GWP = 1500, and COP is 107.75% of that of R404A

V: Intersection of line segment ST and line segment LM

X: Intersection of line segment QR and line segment JK

Y: Intersection of line segment OR and line segment LM

N: Point in which R125 = 0 and R134a = 0 (0/0/100-x)

(1) Method for Determining Points A, D, G, H, I, G', H', and I'

(1-1) Point A

14.8 wt% ≥ x ≥ 10.8 wt% (reference, not claimed)

When the concentration of x = R32 is 10.8 wt%, point A in the ternary composition diagram in which the sum of the concentrations of R125, 1234yf, and 134a is (100-x) wt% is:

(R125 concentration (wt%)/1234yf concentration (wt%)/134a concentration (wt%)) = (40.7/40.5/0);

when the concentration of R32 is 12.4 wt%, point A in the ternary composition diagram in which the sum of the concentrations of R125, 1234yf, and 134a is (100-x) wt% is:

(R125 concentration (wt%)/1234yf concentration (wt%)/134a concentration (wt%)) = (40.4/47.2/0); and

when the concentration of R32 is 14.8 wt%, point A in the ternary composition diagram in which the sum of the concentrations of R125, 1234yf, and 134a is (100-x) wt% is:
(R125 concentration (wt%)/1234yf concentration (wt%)/134a concentration (wt%)) = (40.0/45.2/0).

Accordingly, in the case where the concentration of R125 is regarded as y wt% when the sum of the concentrations of R32, R125, 1234yf, and 134a is 100 wt%, a regression line determined from the above three points plotted in the x-y coordinate is represented by the formula:

$$y = -1.743x + 42.575.$$

Moreover, since the R134a concentration of point A is 0 wt%, the 1234yf concentration of point A is represented by (100 - R32 concentration (wt%) - R125 concentration (wt%).

In light of the above, point A in the ternary composition diagram in which the sum of the concentrations of R125, 1234yf, and R134a is (100-x) (R125 concentration (wt%)/1234yf concentration (wt%)/134a concentration (wt%)) is represented by (42.575-1.743x/100-R32 concentration-R125 concentration/0).

The same calculations were performed for the ranges 20.0 wt% $\geq$ x $\geq$ 18.1 wt%. Table 3-1 shows (R125 concentration (wt%)/1234yf concentration (wt%)/134a concentration (wt%)), determined by the approximate expression of x when R32 = x wt%.

Table 3-1

| Point A | | | |
|---|---|---|---|
| Item | 20.0 $\geq$ x $\geq$ 18.1 | | |
| R32 | 18.1 | 19.0 | 20.0 |
| R125 | 39.3 | 39.1 | 38.9 |
| 1234yf | 42.6 | 41.9 | 41.1 |
| R134a | 0.0 | 0.0 | 0.0 |
| R32 | x | | |
| R125 approximate expression | -0.2103x+43.103 | | |
| 1234yf approximate expression | 100-R32-R125-R134a | | |
| R134a approximate expression | 0 | | |

(1-2) Points D, G, H, I G', H', I', B, C, E, F, B', C', E', and F'

For points D G, H, I G', H', I', B, C, E, F, B', C', E', and F', the same calculations as those of point A were performed for the range 20.0 wt% $\geq$ x $\geq$ 18.1 wt% Tables 3-2 to 3-16 show (R125 concentration (wt%)/1234yf concentration (wt%)/134a concentration (wt%)), determined by the approximate expression of x when R32 = x wt%.

Table 3-2

| | Point D | | | Point G | | | Point H | | |
|---|---|---|---|---|---|---|---|---|---|
| Item | 20.0$\geq$x$\geq$18.1 | | | 20.0$\geq$x$\geq$18.1 | | | 20.0$\geq$x$\geq$18.1 | | |
| R32 | 18.1 | 19.0 | 20.0 | 18.1 | 19.0 | 20.0 | 18.1 | 19.0 | 20.0 |
| R125 | 0.0 | 0.8 | 1.8 | 34.3 | 34.3 | 34.2 | 18.3 | 19.2 | 20.1 |
| 1234yf | 0.0 | 0.0 | 0.0 | 35.3 | 34.8 | 34.3 | 43.5 | 42.7 | 41.8 |
| R134a | 81.9 | 80.2 | 78.2 | 12.3 | 11.9 | 11.5 | 20.1 | 19.1 | 18.1 |
| R32 | x | | | x | | | x | | |
| R125 approximate expression | 0.369x+3.31 | | | 100-R32-1234yf-R134a | | | 100-R32-1234yf-R134a | | |
| 1234yf approximate expression | 0 | | | -0.5258x+44.808 | | | -0.8948x+59.698 | | |
| R134a approximate expression | 100-R32-R125-1234yf | | | -0.4207x+19.907 | | | -1.0517x+39.117 | | |

Table 3-3

| Item | Point I | | | Point G' | | | Point H' | | |
|---|---|---|---|---|---|---|---|---|---|
| | 20.0≥x≥18.1 | | | 20.0≥x≥18.1 | | | 20.0≥x≥18.1 | | |
| R32 | 18.1 | 19.0 | 20.0 | 18.1 | 19.0 | 20.0 | 18.1 | 19.0 | 20.0 |
| R125 | 0.0 | 0.0 | 0.0 | 33.9 | 33.8 | 33.8 | 19.4 | 20.3 | 21.2 |
| 1234yf | 3.9 | 2.0 | 0.0 | 34.7 | 34.3 | 33.7 | 42.1 | 41.3 | 40.4 |
| R134a | 78.0 | 79.0 | 80.0 | 13.3 | 12.9 | 12.5 | 20.4 | 19.3 | 18.4 |
| R32 | x | | | x | | | x | | |
| R125 approximate expression | 0 | | | 100-R32-1234yf-R134a | | | 100-R32-1234yf-R134a | | |
| 1234yf approximate expression | 100-R32-1234yf-R134a | | | $-0.5277x+44.277$ | | | $-0.8948x+58.298$ | | |
| R134a approximate expression | $1.0517x+58.983$ | | | $-0.4207x+20.907$ | | | $-1.0517x+39.417$ | | |

Table 3-4

| Item | Point I' | | | Point B | | | Point C | | |
|---|---|---|---|---|---|---|---|---|---|
| | 20.0≥x≥18.1 | | | 20≥x≥18.1 | | | 20≥x≥18.1 | | |
| R32 | 18.1 | 19.0 | 20.0 | 18.1 | 18.7 | 20.0 | 18.1 | 18.7 | 20.0 |
| R125 | 0.0 | 0.8 | 1.8 | 16.4 | 15.7 | 14.4 | 21.3 | 20.5 | 18.8 |
| 1234yf | 0.0 | 0.0 | 0.0 | 35.6 | 32.4 | 26.2 | 16.4 | 15.0 | 11.8 |
| R134a | 81.9 | 80.2 | 78.2 | 29.9 | 33.2 | 39.4 | 44.2 | 45.8 | 49.4 |
| R32 | x | | | x | | | X | | |
| R125 approximate expression | 100-R32-1234yf-R134a | | | $-1.0442x+35.27$ | | | $-1.3145x+45.088$ | | |
| 1234yf approximate expression | 0 | | | $0.2703x2-15.221x+222.52$ | | | $-2.4404x+60.615$ | | |
| R134a approximate expression | $1.9483x+117.18$ | | | 100-R32-1234yf-R134a | | | 100-R32-1234yf-R134a | | |

Table 3-5

| Item | Point E | | | Point F | | | Point B' | | |
|---|---|---|---|---|---|---|---|---|---|
| | 20≥x≥18.1 | | | 20≥x≥18.1 | | | 20≥x≥18.1 | | |
| R32 | 18.1 | 18.7 | 20.0 | 18.1 | 18.7 | 20.0 | 18.1 | 18.7 | 20.0 |
| R125 | 10.7 | 10.1 | 9.0 | 15.4 | 14.7 | 13.1 | 15.0 | 14.3 | 13.0 |
| 1234yf | 23.2 | 20.5 | 15.0 | 7.9 | 6.6 | 3.5 | 32.6 | 29.4 | 23.3 |
| R134a | 48.0 | 50.7 | 56.0 | 58.6 | 60.0 | 63.4 | 34.3 | 37.6 | 43.7 |
| R32 | x | | | x | | | X | | |
| R125 approximate expression | $-0.8869x+26.726$ | | | $-1.2138x+37.381$ | | | $-1.0442x+33.87$ | | |
| 1234yf approximate expression | $-4.3267x+101.52$ | | | $-0.1576x2+3.716x-7.7649$ | | | $0.2539x2-14.531x+212.38$ | | |
| R134a approximate expression | 100-R32-1234yf-R134a | | | 100-R32-1234yf-R134a | | | 100-R32-1234yf-R134a | | |

Table 3-6

| Point C' | | | | Point E' | | | Point F' | | |
|---|---|---|---|---|---|---|---|---|---|
| Item | $20 \geq x \geq 18.1$ | | | $20 \geq x \geq 18.1$ | | | $20 \geq x \geq 18.1$ | | |
| R32 | 18.1 | 18.7 | 20.0 | 18.1 | 18.7 | 20.0 | 18.1 | 18.7 | 20.0 |
| R125 | 19.8 | 19.0 | 17.3 | 12.1 | 11.5 | 10.4 | 16.9 | 16.1 | 14.5 |
| 1234yf | 14.3 | 12.8 | 9.6 | 26.3 | 23.5 | 17.9 | 10.1 | 8.6 | 5.5 |
| R134a | 47.8 | 49.5 | 53.1 | 43.5 | 46.3 | 51.7 | 54.9 | 56.6 | 60.0 |
| R32 | x | | | x | | | x | | |
| R125 approximate expression | $-1.3145x+43.588$ | | | $-0.8869x+28.126$ | | | $-1.258x+39.651$ | | |
| 1234yf approximate expression | $-2.4717x+59.031$ | | | $0.1994x2-11.991x+177.97$ | | | $0.0607x2-4.7348x+75.905$ | | |
| R134a approximate expression | 100-R32-1234yf-R134a | | | 100-R32-1234yf-R134a | | | 100-R32-1234yf-R134a | | |

(3) Method for Determining Points J, K, L, M, O, P, Q, R, S, and T

(3-1) Points J and K

For points J and K, the same calculations as those of point A were performed for the range 19.0 wt% $\geq$ x $\geq$ 17.5 wt%. Tables 3-17 and 3-18 show (R125 concentration (wt%)/1234yf concentration (wt%)/134a concentration (wt%)) for each concentration range, determined by the approximate expression of x when R32 = x wt%.

Table 3-17

| Point J | | | | |
|---|---|---|---|---|
| Item | 19.0$\geq$x$\geq$17.5 | | | |
| R32 | 17.5 | 18.0 | 18.7 | 19.0 |
| R125 | 15.6 | 14.8 | 13.8 | 13.4 |
| 1234yf | 35.5 | 32.5 | 28.4 | 26.7 |
| R134a | 31.4 | 34.7 | 39.1 | 40.9 |
| R32 | x | | | |
| R125 approximate expression | $0.1273x^2-6.1109x+83.553$ | | | |
| 1234yf approximate expression | $0.1532x^2-11.484x+189.57$ | | | |
| R134a approximate expression | 100-R32-R125-1234yf | | | |

Table 3-18

| Point K | | | | |
|---|---|---|---|---|
| Item | 19.0$\geq$x$\geq$17.5 | | | |
| R32 | 17.5 | 18.0 | 18.7 | 19.0 |
| R125 | 21.1 | 20.2 | 19.0 | 18.5 |
| 1234yf | 16.5 | 14.9 | 12.8 | 11.9 |
| R134a | 44.8 | 46.9 | 49.5 | 50.5 |
| R32 | x | | | |
| R125 approximate expression | $0.0637x^2-4.0554x+72.576$ | | | |
| 1234yf approximate expression | $0.2514x^2-12.247x+153.88$ | | | |
| R134a approximate expression | 100-R32-R125-1234yf | | | |

(3-3) Point L and M

For points L and M, the same calculations as those of point A were performed for the following ranges: 18.7 wt% $\geq$ x $\geq$ 18.0 wt%, 19.3 wt% $\geq$ x $\geq$ 18.7 wt%, and 20.8 wt% $\geq$ x $\geq$ 19.3 wt%. Tables 3-19 and 3-20 show (R125 concentration (wt%)/1234yf concentration (wt%)/134a concentration (wt%)) for each concentration range, determined by the approximate expression of x when R32 = x wt%.

Table 3-19

| Point L' | | | | | | | |
|---|---|---|---|---|---|---|---|
| Item | 18.7$\geq$x$\geq$18.0 | | 19.3$\geq$x$\geq$18.7 | | | 20.8$\geq$x$\geq$19.3 | | |
| R32 | 18.0 | 18.7 | 18.7 | 19.0 | 19.3 | 19.3 | 20.0 | 20.8 |
| R125 | 22.2 | 20.0 | 20.0 | 19.5 | 19.0 | 19.0 | 18.0 | 16.9 |
| 1234yf | 40.8 | 41.6 | 41.6 | 39.7 | 37.8 | 37.8 | 33.9 | 29.5 |

(continued)

| Point L' | | | | | | | | |
|---|---|---|---|---|---|---|---|---|
| Item | 18.7≥x≥18.0 | | 19.3≥x≥18.7 | | | 20.8≥x≥19.3 | | |
| R134a | 19.0 | 19.7 | 19.7 | 21.8 | 23.9 | 23.9 | 28.0 | 32.8 |
| R32 | x | | x | | | x | | |
| R125 approximate expression | -3.1429x+78.771 | | -1.6667x+51.167 | | | -1.3994x+46.001 | | |
| 1234yf approximate expression | 1.1429x+20.229 | | -6.2835x+159.1 | | | -5.5605x+145.15 | | |
| R134a approximate expression | 100-R32-R125-1234yf | | 1 00-R32-R125-1234yf | | | 1 00-R32-R125-1234yf | | |

Table 3-20

| Point M | | | | | | | | |
|---|---|---|---|---|---|---|---|---|
| Item | 18.7≥x≥18.0 | | 19.3≥x≥18.7 | | | 20.8≥x≥19.3 | | |
| R32 | 18.0 | 18.7 | 18.7 | 19.0 | 19.3 | 19.3 | 20.0 | 20.8 |
| R125 | 26.6 | 25.3 | 25.3 | 24.7 | 24.2 | 24.2 | 23.0 | 21.6 |
| 1234yf | 24.1 | 21.9 | 21.9 | 21.0 | 20.0 | 20.0 | 17.9 | 15.5 |
| R134a | 31.3 | 34.1 | 34.1 | 35.3 | 36.5 | 36.5 | 39.1 | 42.1 |
| R32 | x | | x | | | x | | |
| R125 approximate expression | -1.8571x+60.029 | | -1.8333x+59.567 | | | -1.7337x+57.666 | | |
| 1234yf approximate expression | -3.1386x+80.613 | | -3.1952x+81.665 | | | -3.0037x+77.984 | | |
| R134a approximate expression | 100-R32-R125-1234yf | | 1 00-R32-R125-1234yf | | | 1 00-R32-R125-1234yf | | |

(3-5) Point O, P Q and R

The same calculations as those of point A were performed for the range 20.0 wt% ≥ x ≥ 17.5 wt% for points O and P, and for the range 20.8 wt% ≥ x ≥ 17.5 wt% for points Q and R. Tables 3-21 to 3-24 show (R125 concentration (wt%)/1234yf concentration (wt%)/134a concentration (wt%)) for each concentration range, determined by the approximate expression of x when R32 = x wt%.

Table 3-21

| Point O | | | | | | |
|---|---|---|---|---|---|---|
| Item | 20.0≥x≥17.5 | | | | | |
| R32 | 17.5 | 18.0 | 18.7 | 19.0 | 19.3 | 20.0 |
| R125 | 33.8 | 32.2 | 30.0 | 29.1 | 28.1 | 25.9 |
| 1234yf | 35.1 | 35.7 | 36.4 | 36.8 | 37.1 | 37.9 |
| R134a | 13.6 | 14.1 | 14.9 | 15.1 | 15.5 | 16.2 |
| R32 | x | | | | | |
| R125 approximate expression | -3.1554x+89.013 | | | | | |
| 1234yf approximate expression | 1.1108x+15.673 | | | | | |
| R134a approximate expression | 100-R32-R125-1234yf | | | | | |

Table 3-22

| Point P | | | | | | |
|---|---|---|---|---|---|---|
| Item | 20.0≥x≥17.5 | | | | | |
| R32 | 17.5 | 18.0 | 18.7 | 19.0 | 19.3 | 20.0 |
| R125 | 33.9 | 32.8 | 31.4 | 30.8 | 30.2 | 28.9 |
| 1234yf | 35.0 | 33.2 | 30.7 | 29.7 | 28.7 | 26.5 |
| R134a | 13.6 | 16.0 | 19.2 | 20.5 | 21.8 | 24.6 |
| R32 | x | | | | | |
| R125 approximate expression | 0.0698)Q-4.6141x+93.254 | | | | | |
| 1234yf approximate expression | 0.1361x2-8.5106x+142.27 | | | | | |
| R134a approximate expression | 100-R32-R125-1234yf | | | | | |

Table 3-23

| Point Q | | | | | | | |
|---|---|---|---|---|---|---|---|
| Item | 20.8≥x≥17.5 | | | | | | |
| R32 | 17.5 | 18.0 | 18.7 | 19.0 | 19.3 | 20.0 | 20.8 |
| R125 | 10.4 | 11.4 | 12.8 | 13.4 | 14.0 | 15.4 | 16.9 |
| 1234yf | 24.2 | 25.1 | 26.2 | 26.7 | 27.2 | 28.3 | 29.5 |
| R134a | 47.9 | 45.5 | 42.3 | 40.9 | 39.5 | 36.3 | 32.8 |
| R32 | x | | | | | | |
| R125 approximate expression | -0.0198x2+27.157x-31.225 | | | | | | |
| 1234yf approximate expression | -0.0377x2+3.0486x-1 7.594 | | | | | | |
| R134a approximate expression | 100-R32-R125-1234yf | | | | | | |

Table 3-24

| Point R | | | | | | | |
|---|---|---|---|---|---|---|---|
| Item | 20.8≥x≥17.5 | | | | | | |
| R32 | 17.5 | 18.0 | 18.7 | 19.0 | 19.3 | 20.0 | 20.8 |
| R125 | 21.4 | 22.2 | 23.3 | 23.7 | 24.2 | 25.2 | 26.3 |
| 1234yf | 17.0 | 17.8 | 19.0 | 19.5 | 20.0 | 21.1 | 22.4 |
| R134a | 44.1 | 42.0 | 39.0 | 37.8 | 36.5 | 33.7 | 30.5 |
| R32 | x | | | | | | |
| R125 approximate expression | -0.0401x2+3.0217x-19.198 | | | | | | |
| 1234yf approximate expression | -0.0297x2+2.7774x-22.544 | | | | | | |
| R134a approximate expression | 100-R32-R125-1234yf | | | | | | |

(3-9) Points S and T

For point S and T, the same calculations as those of point A were performed for the ranges19.0 wt% ≥ x ≥ 17.0 wt% and 20.8 wt% ≥ x ≥ 19.0 wt%. Table 3-25 shows (R125 concentration (wt%)/1234yf concentration (wt%)/134a concentration (wt%)) for each concentration range, determined by the approximate expression of x when R32 = x wt%.

Table 3-25

| Item | Point S | | | | | Point T | | | | |
|---|---|---|---|---|---|---|---|---|---|---|
| | $19.0 \geq x \geq 17.0$ | | | | | $19.0 \geq x \geq 17.0$ | | | | |
| R32 | 17.0 | 17.5 | 18.0 | 18.7 | 19.0 | 17.0 | 17.5 | 18.0 | 18.7 | 19.0 |
| R125 | 21.6 | 22.0 | 22.2 | 22.4 | 22.4 | 28.3 | 28.5 | 28.7 | 28.9 | 28.8 |
| 1234yf | 41.5 | 41.1 | 40.8 | 40.4 | 40.3 | 27.2 | 27.2 | 27.1 | 26.9 | 26.9 |
| R134a | 19.9 | 19.4 | 19.0 | 18.5 | 18.3 | 27.5 | 26.8 | 26.2 | 25.5 | 25.3 |
| R32 | x | | | | | x | | | | |
| R125 approximate expression | 100-R32-1234yf-R134a | | | | | 100-R32-1234yf-R134a | | | | |
| 1234yf approximate expression | 0.1108x2-4.5904x+87.503 | | | | | -0.0766x2+2.5779x+5.5242 | | | | |
| R134a approximate expression | 0.0939x2-4.1798x+63.826 | | | | | 0.2286x2-9.3441x+120.28 | | | | |

(4) Method for Determining Intersections V, X and Y

(4-2) Intersection V of Line Segment LM and Line Segment ST

Intersection V when x = R32 = 17.5 wt% was calculated from the formulas of line segments shown in Table 3-28 in the same manner as for intersection U. Moreover, the approximate expression of intersection V in the range of 18.0 wt% $\geq$ x $\geq$ 17.0 wt% was calculated in the same manner as for point A. Table 3-28 shows intersection V (R125 concentration (wt%)/1234yf concentration (wt%)/134a concentration (wt%)) represented by the approximate expression of x when R32 = x wt%.

Table 3-28

| R32=17.5% | Line segment LM and line segment ST | | | |
|---|---|---|---|---|
| Item | L | M | S | T |
| x=R32 | 17.5 | 17.5 | 17.5 | 17.5 |
| y=R125 | 23.9 | 27.5 | 22.0 | 28.5 |
| z=1234yf | 40.1 | 25.8 | 41.1 | 27.2 |
| R134a | 18.5 | 29.2 | 19.4 | 26.8 |
| Line segment LM | z= | -3.9728 | y + | 135.08 |
| Line segment ST | z= | -2.1399 | y + | 88.187 |
| Intersection V | | | | |
| Item | $18.0 \geq x \geq 17.0$ | | | |
| | V=M=T | Intersection V | V=L=S | |
| x=R32 | 17.0 | 17.5 | 18.0 | |
| y=R125 | 28.3 | 25.6 | 22.2 | |
| z=1234yf | 27.2 | 33.4 | 40.8 | |
| R134a | 27.5 | 23.5 | 19.0 | |
| R32 | x | | | |
| R125 approximate expression | -1.3362x2+40.667x-276.87 | | | |
| 1234yf approximate expression | 2.2412x2-64.842x+481.81 | | | |

(continued)

| Intersection V | | | | |
|---|---|---|---|---|
| Item | 18.0≥x≥17.0 | | | |
| | V=M=T | Intersection V | V=L=S | |
| R134a approximate expression | 100-R32-R125-1234yf | | | |

(4-3) Intersection W of Line Segment OP and Line Segment ST

Intersection W when x = R32 = 20.4 wt% was calculated from the formulas of line segments shown in Table 3-29 in the same manner as for intersection U. Moreover, the approximate expression of intersection W in the range of 20.8 wt% ≥ x ≥ 20.0 wt% was calculated in the same manner as for point A. Table 3-29 shows intersection W (R125 concentration (wt%)/1234yf concentration (wt%)/134a concentration (wt%)) represented by the approximate expression of x when R32 = x wt%.

Table 3-29

| R32=20.4% | Line segment OP and line segment ST | | | |
|---|---|---|---|---|
| Item | O | P | S | T |
| x=R32 | 20.4 | 20.4 | 20.4 | 20.4 |
| y=R125 | 24.5 | 28.2 | 23.0 | 29.0 |
| z=1234yf | 38.5 | 25.3 | 39.4 | 26.4 |
| R134a | 16.6 | 26.1 | 17.3 | 24.2 |
| Line segment OP | z= | -3.5676 | y + | 125.91 |
| Line segment ST | z= | -2.1667 | y + | 89.233 |
| Intersection W | | | | |
| Item | 20.8≥x≥20.0 | | | |
| | W=P=T | Intersection W | W=O=S | |
| x=R32 | 20.0 | 20.4 | 20.8 | |
| y=R125 | 28.9 | 26.2 | 23.0 | |
| z=1234yf | 26.5 | 32.5 | 39.2 | |
| R134a | 24.6 | 20.9 | 17.0 | |
| R32 | x | | | |
| R125 approximate expression | -1.4439x2+51.537x-424.27 | | | |
| 1234yf approximate expression | 2.1733x2-72.785x+612.88 | | | |
| R134a approximate expression | 100-R32-R125-1234yf | | | |

(4-5) Intersection Y of Line Segment LM and Line Segment QR

Intersection Y when x = R32 = 20.0 wt% was calculated from the formulas of line segments shown in Table 3-31 in the same manner as for intersection U. Moreover, the approximate expression of intersection Y in the range of 20.8 wt% ≥ x ≥ 19.3 wt% was calculated in the same manner as for point A. Table 3-31 shows intersection Y (R125 concentration (wt%)/1234yf concentration (wt%)/134a concentration (wt%)) represented by the approximate expression of x when R32 = x wt%.

Table 3-31

| R32=20.0% | Line segment LM and line segment QR | | | |
|---|---|---|---|---|
| Item | L | M | Q | R |
| x=R32 | 20.0 | 20.0 | 20.0 | 20.0 |
| y=R125 | 18.0 | 23.0 | 15.4 | 25.2 |
| z=1234yf | 33.9 | 17.9 | 28.3 | 21.1 |
| R134a | 28.1 | 39.1 | 36.3 | 33.7 |
| Line segment LM | z= | -3.195 | y + | 91.409 |
| Line segment QR | z= | -0.7337 | y + | 39.621 |
| Intersection Y | | | | |
| Item | | $20.8 \geq x \geq 19.3$ | | |
| | | Y=M=R | Intersection Y | Y=L=Q |
| x=R32 | | 19.3 | 20.0 | 20.8 |
| y=R125 | | 24.2 | 21.0 | 16.9 |
| z=1234yf | | 20.0 | 24.2 | 29.5 |
| R134a | | 36.5 | 34.8 | 32.8 |
| R32 | | x | | |
| R125 approximate expression | | -0.4421x2+12.862x-59.353 | | |
| 1234yf approximate expression | | 0.4405x2-11.34x+74.783 | | |
| R134a approximate expression | | 100-R32-R125-1234yf | | |

The mixture (at least one of the mixtures described above) contained in the present composition may further contain water as another component, in addition to the four basic components (R32, R125, R134a, and 1234yf).

The concentration of water contained in the mixture is preferably 200 weight ppm or less based on the 1234yf content of the mixture. The lower limit of the water concentration based on the 1234yf content of the mixture is not particularly limited, as long as the effect of improving the stability of the composition is exhibited. For example, the lower limit of the water concentration can be 0.1 weight ppm.

The presence of water in the mixture results in an unexpected effect such that the chemical stability of the composition comprising the mixture increases. The reason for this is considered as follows. Specifically, because the mixture contains water, the double bonds in the molecules of the unsaturated fluorinated hydrocarbons contained in the composition can be stably present, and oxidation of the unsaturated fluorinated hydrocarbons is less likely to occur, consequently improving the stability of the composition.

The mixture contained in the present composition may contain other component(s) (fluorinated hydrocarbon(s) that are different from the four basic components) in addition to the four basic components (R32, R125, R134a, and 1234yf). The fluorinated hydrocarbon(s) as other component(s) are not particularly limited, and are, for example, at least one fluorinated hydrocarbon selected from the group consisting of HCFC-1122, HCFC-124, CFC-1113, and 3,3,3-trifluoropropyne.

The mixture contained in the present composition may contain, in addition to the four basic components (R32, R125, R134a, and 1234yf), at least one halogenated organic compound represented by formula (1): $C_mH_nX_p$, wherein each X independently is F, Cl or Br, m is 1 or 2, $2m + 2 \geq n + p$, and $p \geq 1$, as other component(s). The at least one halogenated organic compound as other component(s) is not particularly limited. Preferable examples include difluorochloromethane, chloromethane, 2-chloro-1,1,1,2,2-pentafluoroethane, 2-chloro-1,1,1,2-tetrafluoroethane, 2-chloro-1,1-difluoroethylene and trifluoroethylene.

The mixture contained in the present composition may contain, in addition to the four basic components (R32, R125, R134a, and 1234yf), at least one organic compound of formula (2): $C_mH_nX_p$, wherein each X independently is an atom that is not a halogen atom, m is 1 or 2, $2m + 2 \geq n + p$, and $p \geq 1$, as other component(s). The at least one organic compound as other component(s) is not particularly limited. Preferable examples include propane and isobutane.

As described above, when the mixture contains other components, the content of other components in the mixture, whether other components are used singly or in a combination of two or more, is 0.5 wt% or less, preferably 0.3 wt% or less, and even more preferably 0.1 wt% or less, as the total content amount.

Specific Embodiments

In one embodiment, the present composition is a composition comprising a mixture of fluorinated hydrocarbons, wherein the mixture comprises R32, R125, R134a, 1234yf, and at least one fluorinated hydrocarbon selected from HCFC-1122, HCFC-124, CFC-1113, and 3,3,3-trifluoropropyne. That is, in addition to the four basic components (R32, R125, R134a, and 1234yf), at least one of HCFC-1122, HCFC-124, CFC-1113, and 3,3,3-trifluoropropyne is contained as other component(s) (fluorinated hydrocarbon(s) that are different from the four basic components).

Another embodiment of the present composition is a composition comprising a mixture of fluorinated hydrocarbons, wherein the mixture comprises R32, R125, R134a, 1234yf, and at least one halogenated organic compound of formula (1): $C_mH_nX_p$, wherein each X independently is F, Cl or Br, m is 1 or 2, $2m + 2 \geq n + p$, and $p \geq 1$. That is, in addition to the four basic components (R32, R125, R134a, and 1234yf), at least one halogenated organic compound of formula (1) is contained as other component(s).

In yet another embodiment the present composition is a composition comprising a mixture of fluorinated hydrocarbons, wherein the mixture comprises R32, R125, R134a, 1234yf, and at least one organic compound of formula (2): $C_mH_nX_p$, wherein each X independently is an atom that is not a halogen atom, m is 1 or 2, $2m + 2 > n + p$, and $p \geq 1$. That is, in addition to the four basic components (R32 R125, R134a, and 1234yf), at least one organic compound of formula (2) is contained as other component(s).

In the compositions of the second to fourth embodiments, the content of other components in the mixture is 0.5 wt% or less, preferably 0.3 wt% or less, and particularly preferably 0.1 wt% or less, as in the first embodiment.

In an even further embodiment the present composition is a composition comprising a mixture of fluorinated hydrocarbons, wherein the mixture comprises difluoromethane (R32), pentafluoroethane (R125), 1,1,1,2-tetrafluoroethane (R134a), 2,3,3,3-tetrafluoropropene (1234yf), and water. That is, in addition to the four basic components (R32 R125, R134a, and 1234yf), water is contained as another component. In the composition of the fifth embodiment, the content of water as another component in the mixture is 0.5 wt% or less, preferably 0.3 wt% or less, and particularly preferably 0.1 wt% or less.

The concentration of water contained in the mixture is preferably 200 weight ppm or less based on the 1234yf content of the mixture. The lower limit of the water concentration based on the 1234yf content of the mixture is not particularly limited, as long as the effect of improving the stability of the composition is exhibited. For example, the lower limit of the water concentration can be 0.1 weight ppm.

The presence of water in the mixture results in an unexpected effect such that the chemical stability of the composition comprising the mixture increases. The reason for this is considered as follows. That is, because the mixture contains water, the double bonds in the molecules of the unsaturated fluorinated hydrocarbons contained in the composition can be stably present, and oxidation of the unsaturated fluorinated hydrocarbons is less likely to occur, consequently improving the stability of the composition.

Optional Additives

The present composition may appropriately contain various additives in addition to the mixture of fluorinated hydrocarbons.

The present composition may further contain a refrigerant oil. The refrigerant oil is not particularly limited and can be suitably selected from commonly used refrigerant oils. In this case, a refrigerant oil that is more excellent in terms of, for example, the effect of improving miscibility with the mixture, and stability of the mixture, may be appropriately selected, if necessary.

Although there is no particular limitation, the stability of the mixture can be evaluated by a commonly used method. Examples of such methods include an evaluation method using the amount of free fluorine ions as an index according to ASHRAE Standard 97-2007. There is, for example, another evaluation method using the total acid number as an index. This method can be performed, for example, according to ASTM D 974-06.

Preferred as the type of the refrigerant oil is, specifically, for example, at least one member selected from the group consisting of polyalkylene glycol (PAG), polyol ester (POE), and polyvinyl ether (PVE).

The refrigerant oil to be used may have, for example, a kinematic viscosity at 40°C of 5-400 cSt. When the refrigerant oil has a kinematic viscosity within this range, it is preferable in terms of lubricity.

The concentration of the refrigerant oil is not particularly limited, and may be generally 10-50 wt%, relative to the entire composition.

The present composition may further contain one or more tracers. The one or more tracers are added to the compositions of the present invention at a detectable concentration so that, when the present compositions are diluted, contaminated, or undergo any other change, the change can be traced. There is no limitation on the tracers. Preferable examples include hydrofluorocarbons, deuterated hydrocarbons, deuterated hydrofluorocarbons, perfluorocarbons, fluoroethers, brominated compounds, iodinated compounds, alcohols, aldehydes, ketones and nitrous oxide ($N_2O$). Particularly preferred are hydrofluorocarbons or fluoroethers.

The present composition may further contain a compatibilizer. The type of compatibilizer is not particularly limited. Preferable examples include polyoxyalkylene glycol ethers, amides, nitriles, ketones, chlorocarbons, esters, lactones, aryl ethers, fluoroethers and 1,1,1-trifluoroalkans. Particularly preferred are polyoxyalkylene glycol ethers.

The present composition may further contain one or more ultraviolet fluorescent dyes. There is no limitation on the ultraviolet fluorescent dyes. Preferable examples include naphthalimide, coumarin, anthracene, phenanthrene, xanthene, thioxanthene, naphthoxanthene, fluorescein, and derivatives thereof. Either naphthalimide or coumarin, or both, are particularly preferable.

The present composition may further contain e.g. a stabilizer, a polymerization inhibitor, if necessary.

Examples of stabilizers include, but are not particularly limited to, (i) aliphatic nitro compounds, such as nitromethane and nitroethane; and aromatic nitro compounds, such as nitrobenzene and nitrostyrene; (ii) ethers, such as 1,4-dioxane; amines, such as 2,2,3,3,3-pentafluoropropylamine and diphenylamine; butylhydroxyxylene and benzotriazole. The stabilizers can be used singly or in a combination of two or more.

The concentration of the stabilizer varies depending on the type of stabilizer, but can be determined within a range in which the properties of the composition are not impaired. The concentration of the stabilizer is generally preferably 0.01-5 parts by weight (pbw), and more preferably 0.05-2 pbw, per 100 pbw of the mixture.

Examples of polymerization inhibitors include, but are not particularly limited to, 4-methoxy-1-naphthol, hydroquinone, hydroquinonemethyl ether, dimethyl-t-butylphenol, 2,6-di-tert-butyl-p-cresol and benzotriazole.

The concentration of the polymerization inhibitor is generally preferably 0.01-5 pbw, and more preferably 0.05-2 pbw, per 100 pbw of the mixture.

An object can be refrigerated by a method comprising the step of operating a refrigeration cycle using the present composition. For example, the composition can be circulated via a compressor to form the refrigeration cycle.

It is also possible to obtain a device for forming a refrigeration cycle in which each of the above compositions is circulated via a compressor. In a refrigeration method using such a device, because the composition ratio of R32, R125, R134a, and 1234yf contained in the mixture is the above specific composition ratio, the outlet temperature of the compressor can, for example, be set to 110°C or less. Because the outlet temperature of the compressor is set within this range, when the composition comprises a refrigerant oil, the deterioration of the refrigerant oil can be suppressed.

Refrigerating devices that use the present composition in the present invention are refrigerating devices used for freezing and refrigerating warehouses, turbo refrigerators and screw refrigerators.

Examples

The present invention is described in detail below with reference to Examples and Comparative Examples. However, the present invention is not limited to the Examples.

Examples 1-33 to 1-54, 2-54 to 2-80 and 3-53 to 3-89 and Comparative Examples 1-5 to 1-7, 2-32 to 2-49 and 3-52 to 3-68

The GWP of each of R404A and compositions comprising a mixture of R32, R125, R134a, and 1234yf was evaluated based on the values described in the Fourth Assessment Report of the Intergovernmental Panel on Climate Change (IPCC). The refrigerating capacity of each of R404A and the compositions comprising a mixture of R32, R125, R134a, and 1234yf was determined by performing refrigeration cycle theoretical calculations for the mixed refrigerants using the National Institute of Science and Technology (NIST) and Reference Fluid Thermodynamic and Transport Properties Database (REFPROP 9.0) under the following conditions.

| | |
|---|---|
| Evaporation temperature | -40°C |
| Condensation temperature | 40°C |
| Superheating temperature | 20 K |
| Supercooling temperature | 0 K |
| Compressor efficiency | 70% |

The flammability was determined based on the ASHRAE flammability classification.

Further, Tables 4-5 to 6-12 show the GWP, COP, compressor outlet pressure, compressor outlet temperature, and refrigerating capacity calculated based on these results. Table 5 shows the COP, refrigerating capacity, and compressor outlet pressure each relative to those of R22, and Table 6 shows the COP and refrigerating capacity each relative to those of R404A.

The coefficient of performance (COP) was calculated according to the following equation.

$$COP = (refrigerating\ capacity\ or\ heating\ capacity)\ /\ amount\ of\ electrical\ power\ consumed$$

In Figs. 21-23, 25 and 36, open circles (○) represent the compositions of the Examples other than the reference signs, and open triangles (Δ) represent the compositions of the Comparative Examples other than the reference signs.

[Table 4-5]

| Item | | Unit | Comparative Example 1-5 | Example 1-33 | Example 1-34 | Example 1-35 | Example 1-36 | Example 1-37 | Example 1-38 | Example 1-39 |
|---|---|---|---|---|---|---|---|---|---|---|
| | | | A | D | G | H | I | G' | H' | I'=N |
| Composition | R32 | mass% | 18.1 | 18.1 | 18.1 | 18.1 | 18.1 | 18.1 | 18.1 | 18.1 |
| | R125 | mass% | 39.3 | 10.0 | 34.3 | 18.3 | 0.0 | 33.9 | 19.4 | 0.0 |
| | 1234yf | mass% | 42.6 | 0.0 | 35.3 | 43.5 | 3.9 | 34.7 | 42.1 | 0.0 |
| | R134a | mass% | 0.0 | 71.9 | 12.3 | 20.1 | 78.0 | 13.3 | 20.4 | 81.9 |
| GWP | | Year | 1500 | 1500 | 1500 | 1052 | 1238 | 1500 | 1095 | 1293 |
| ASHRAE non-flammability | | - | Flammable | Non-flammable | Non-flammable | Non-flammable | Non-flammable | Non-flammable | Non-flammable | Non-flammable |

[Table 4-6]

| Item | | Unit | Comparative Example 1-6 | Example 1-40 | Example 1-41 | Example 1-42 | Example 1-43 | Example 1-44 | Example 1-45 | Example 1-46 | Example 1-47 |
|---|---|---|---|---|---|---|---|---|---|---|---|
| | | | A | D | G | H | I | G' | H' | I' | N |
| Composition | R32 | mass% | 19.0 | 19.0 | 19.0 | 19.0 | 19.0 | 19.0 | 19.0 | 19.0 | 19.0 |
| | R125 | mass% | 39.1 | 10.3 | 34.3 | 19.2 | 0.0 | 33.8 | 20.3 | 0.8 | 0.0 |
| | 1234yf | mass% | 41.9 | 0.0 | 34.8 | 42.7 | 2.0 | 34.3 | 41.3 | 0.0 | 0.0 |
| | R134a | mass% | 0.0 | 70.7 | 11.9 | 19.1 | 79.0 | 12.9 | 19.4 | 80.2 | 81.0 |
| GWP | | Year | 1500 | 1500 | 1500 | 1075 | 1258 | 1500 | 1118 | 1303 | 1287 |
| ASHRAE non-flammability | | - | Flammable | Non-flammable | Non-flammable | Non-flammable | Non-flammable | Non-flammable | Non-flammable | Non-flammable | Non-flammable |

[Table 4-7]

| Item | | Unit | Comparative Example 1-7 | Example 1-48 | Example 1-49 | Example 1-50 | Example 1-51 | Example 1-52 | Example 1-53 | Example 1-54 |
|---|---|---|---|---|---|---|---|---|---|---|
| | | | A | D | G | H | I=N | G' | H' | I' |
| Composition | R32 | mass% | 20.0 | 20.0 | 20.0 | 20.0 | 20.0 | 20.0 | 20.0 | 20.0 |
| | R125 | mass% | 38.9 | 10.7 | 34.2 | 20.1 | 0.0 | 33.8 | 21.2 | 1.8 |
| | 1234yf | mass% | 41.1 | 0.0 | 34.3 | 41.8 | 0.0 | 33.7 | 40.4 | 0.0 |
| | R134a | mass% | 0.0 | 69.3 | 11.5 | 18.1 | 80.0 | 12.5 | 18.4 | 78.2 |
| GWP | | Year | 1500 | 1500 | 1500 | 1099 | 1279 | 1500 | 1142 | 1316 |
| ASHRAE non-flammability | | - | Flammable | Non-flammable | Non-flammable | Non-flammable | Non-flammable | Non-flammable | Non-flammable | Non-flammable |

[Table 5-7]

| Item | | Unit | Comparative Example | Comparative Example 2-32 | Comparative Example 2-33 | Comparative Example 2-34 | Comparative Example 2-35 | Comparative Example 2-36 | Example 2-54 | Example 2-55 | Example 2-56 |
|---|---|---|---|---|---|---|---|---|---|---|---|
| | | | | A | D | G' | H' | I' | B | C | E |
| Composition | R32 | mass% | R22 | 18.1 | 18.1 | 18.1 | 18.1 | 18.1 | 18.1 | 18.1 | 18.1 |
| | R125 | mass% | | 39.3 | 100 | 33.9 | 19.4 | 0.0 | 16.4 | 21.3 | 10.7 |
| | 1234yf | mass% | | 42.6 | 0.0 | 34.7 | 42.1 | 0.0 | 35.6 | 16.4 | 23.2 |
| | R134a | mass% | | 0.0 | 71.9 | 13.3 | 20.4 | 81.9 | 29.9 | 44.2 | 48.0 |
| GWP | | Year | 1810 | 1500 | 1500 | 1500 | 1095 | 1293 | 1125 | 1500 | 1184 |
| Performance | Coefficient of performance | (relative to R22%) | 100 | 89.94 | 96.80 | 91.22 | 92.71 | 97.91 | 93.48 | 94.15 | 94.97 |
| | Refrigerating capacity | (relative to R22%) | 100 | 96 | 74 | 92 | 85 | 70 | 82 | 82 | 78 |
| | Outlet temperature | °C | 149 | 103 | 123 | 107 | 108 | 125 | 111 | 116 | 116 |
| | Outlet pressure | (relative to R22%) | 100 | 117.8 | 92.8 | 113.3 | 105.0 | 87.6 | 102.5 | 102.5 | 97.5 |

(continued)

| | | Comparative Example | Example 2-57 | Example 2-58 | Example 2-59 | Example 2-60 | Example 2-61 | Example 2-62 | Comparative Example 2-37 |
|---|---|---|---|---|---|---|---|---|---|
| Item | Unit | | F | B' | C' | E' | F' | | |
| Composition | R32 | mass% | R22 | 18.1 | 18.1 | 18.1 | 18.1 | 18.1 | 18.1 | 18.1 |
| | R125 | mass% | | 15.4 | 15.0 | 19.8 | 12.1 | 16.9 | 15.0 | 20.0 |
| | 1234yf | mass% | | 7.9 | 32.6 | 14.3 | 26.3 | 10.1 | 45.0 | 30.0 |
| | R134a | mass% | | 58.6 | 34.3 | 47.8 | 43.5 | 54.9 | 21.9 | 31.9 |
| GWP | | Year | 1810 | 1500 | 1139 | 1500 | 1169 | 1500 | 1292 | 1252 |
| Performance | Coefficient of performance | (relative to R22%) | 100 | 95.52 | 93.84 | 94.49 | 94.60 | 95.17 | 94.55 | 93.26 |
| | Refrigerating capacity | (relative to R22%) | 100 | 78 | 81 | 81 | 79 | 79 | 80 | 84 |
| | Outlet temperature | °C | 149 | 120 | 112 | 117 | 115 | 119 | 115 | 111 |
| | Outlet pressure | (relative to R22%) | 100 | 97.5 | 101.25 | 101.25 | 98.75 | 98.75 | 99.7 | 104.1 |

[Table 5-8]

| Item | | Unit | Comparative Example | Comparative Example 2-38 | Comparative Example 2-39 | Comparative Example 2-40 | Comparative Example 2-41 | Comparative Example 2-42 | Example 2-63 | Example 2-64 | Example 2-65 |
|---|---|---|---|---|---|---|---|---|---|---|---|
| | | | | A | D | G' | H' | I' | B | C | E |
| Composition | R32 | mass% | R22 | 18.7 | 18.7 | 18.7 | 18.7 | 18.7 | 18.7 | 18.7 | 18.7 |
| | R125 | mass% | | 39.2 | 10.2 | 33.9 | 20.0 | 0.6 | 15.7 | 20.5 | 10.1 |
| | 1234yf | mass% | | 42.1 | 0.0 | 34.4 | 41.6 | 0.0 | 32.4 | 15.0 | 20.6 |
| | R134a | mass% | | 0.0 | 71.1 | 13.0 | 19.6 | 80.7 | 33.2 | 45.8 | 50.6 |
| GWP | | Year | 0 | 0 | 1500 | 1500 | 1108 | 1301 | 1152 | 1500 | 1204 |
| Performance | Coefficient of performance | (relative to R22%) | 100 | 9000 | 96.76 | 91.25 | 92.66 | 97.83 | 93.77 | 94.35 | 95.22 |
| | Refrigerating capacity | (relative to R22%) | 100 | 97 | 75 | 93 | 86 | 71 | 83 | 82 | 78 |
| | Outlet temperature | °C | 149 | 104 | 124 | 107 | 109 | 125 | 112 | 117 | 117 |
| | Outlet pressure | (relative to R22%) | 100 | 118.6 | 93.6 | 114.1 | 106.2 | 88.5 | 102.5 | 102.6 | 97.5 |

| Item | | Unit | Comparative Example | Example 2-66 | Example 2-67 | Example 2-68 | Example 2-69 | Example 2-70 | Example 2-71 | Comparative Example 2-43 |
|---|---|---|---|---|---|---|---|---|---|---|
| | | | | F | B' | C' | E' | F' | | |
| Composition | R32 | mass% | R22 | 18.7 | 18.7 | 18.7 | 18.7 | 18.7 | 18.7 | 18.7 |
| | R125 | mass% | | 14.7 | 14.3 | 19.0 | 11.5 | 16.1 | 15.0 | 25.0 |
| | 1234yf | mass% | | 6.6 | 29.4 | 12.8 | 23.5 | 8.6 | 16.3 | 6.3 |
| | R134a | mass% | | 60.0 | 37.6 | 49.5 | 46.3 | 56.6 | 50.0 | 50.0 |
| GWP | | Year | R22 | 0 | 1166 | 1500 | 1192 | 1500 | 1367 | 1301 |
| Performance | Coefficient of performance | (relative to R22%) | 100 | 95.70 | 94.13 | 94.70 | 94.86 | 95.38 | 94.94 | 97.83 |
| | Refrigerating capacity | (relative to R22%) | 100 | 78 | 81 | 81 | 79 | 79 | 80 | 71 |
| | Outlet temperature | °C | 149 | 121 | 114 | 118 | 116 | 120 | 118 | 125 |
| | Outlet pressure | (relative to R22%) | 100 | 97.5 | 101.25 | 101.25 | 98.75 | 98.75 | 99.5 | 88.5 |

34

EP 3 378 918 B1

[Table 5-9]

| Item | | Unit | Comparative Example | Comparative Example 2-44 | Comparative Example 2-45 | Comparative Example 2-46 | Comparative Example 2-47 | Comparative Example 2-48 | Example 2-72 | Example 2-73 | Example 2-74 |
|---|---|---|---|---|---|---|---|---|---|---|---|
| | | | | A | D | G' | H' | I' | B | C | E |
| Composition | R32 | mass% | R22 | 20.0 | 20.0 | 20.0 | 20.0 | 20.0 | 20.0 | 20.0 | 20.0 |
| | R125 | mass% | | 38.9 | 10.7 | 33.8 | 21.2 | 1.8 | 14.4 | 18.8 | 9.0 |
| | 1234yf | mass% | | 41.1 | 0.0 | 33.7 | 40.4 | 0.0 | 26.2 | 11.8 | 15.0 |
| | R134a | mass% | | 0.0 | 69.3 | 12.5 | 18.4 | 78.2 | 39.4 | 49.4 | 56.0 |
| GWP | | Year | 0 | 0 | 1500 | 1500 | 1142 | 1316 | 1203 | 1500 | 1251 |
| Performance | Coefficient of performance | (relative to R22%) | 100 | 90.13 | 96.68 | 91.33 | 9260 | 97.67 | 94.33 | 94.80 | 95.73 |
| | Refrigerating capacity | (relative to R22%) | 100 | 99 | 76 | 95 | 88 | 73 | 83 | 83 | 78 |
| | Outlet temperature | °C | 149 | 105 | 125 | 109 | 110 | 127 | 116 | 120 | 121 |
| | Outlet pressure | (relative to R22%) | 100 | 120.3 | 95.4 | 115.9 | 108.6 | 90.6 | 102.5 | 102.5 | 97.5 |

(continued)

| Item | | Unit | Comparative Example | Example 2-75 F | Example 2-76 B' | Example 2-77 C' | Example 2-78 E' | Example 2-79 F' | Example 2-80 | Comparative Example 2-49 |
|---|---|---|---|---|---|---|---|---|---|---|
| Composition | R32 | mass% | R22 | 20.0 | 20.0 | 20.0 | 20.0 | 20.0 | 20.0 | 20.0 |
| | R125 | mass% | | 13.1 | 13.0 | 17.3 | 10.4 | 14.5 | 14.0 | 20.0 |
| | 1234yf | mass% | | 3.5 | 23.3 | 9.6 | 17.9 | 5.5 | 13.0 | 30.0 |
| | R134a | mass% | | 63.4 | 43.7 | 53.1 | 51.7 | 60.0 | 53.0 | 30.0 |
| GWP | | Year | R22 | 0 | 1216 | 1500 | 1239 | 1500 | 1383 | 1265 |
| Performance | Coefficient of performance | (relative to R22%) | 100 | 96.12 | 94.69 | 95.15 | 95.36 | 95.80 | 95.29 | 93.39 |
| | Refrigerating capacity | (relative to R22%) | 100 | 78 | 82 | 81 | 80 | 79 | 80 | 86 |
| | Outlet temperature | °C | 149 | 123 | 117 | 121 | 119 | 123 | 120 | 113 |
| | Outlet pressure | (relative to R22%) | 100 | 97.5 | 101.25 | 101.25 | 98.75 | 98.75 | 99.9 | 106.4 |

[Table 6-9]

| Item | | Unit | Comparative Example | Comparative Example 3-52 | Comparative Example 353 | Example 353 | Example 3-54 | Comparative Example 3-54 | Example 355 | Comparative Example 3-55 | Example 356 |
|---|---|---|---|---|---|---|---|---|---|---|---|
| | | | | A | D | G' | H'=L | I' | J | K | M |
| Composition | | mass% | R404A | 18.7 | 18.7 | 18.7 | 18.7 | 18.7 | 18.7 | 18.7 | 18.7 |
| | R32 R125 | mass% | | 39.2 | 10.2 | 33.9 | 20.0 | 0.6 | 13.9 | 19.0 | 25.3 |
| | 1234yf | mass% | | 42.1 | 0.0 | 34.4 | 41.6 | 0.0 | 28.6 | 12.8 | 21.9 |
| | R134a | mass% | | 0.0 | 71.1 | 13.0 | 19.7 | 80.7 | 38.8 | 49.5 | 34.1 |
| GWP | | Year | 3922 | 1500 | 1500 | 1500 | 1110 | 1301 | 1169 | 1500 | 1500 |
| Performance | Coefficient of performance | (relative to R404A%) | 100 | 104.90 | 112.79 | 106.37 | 108.02 | 114.04 | 109.87 | 110.39 | 108.69 |
| | Refrigerating capacity | (relative to R404A%) | 100 | 101 | 78 | 97 | 90 | 74 | 85 | 85 | 90 |
| | Outlet temperature | °C | 93 | 104 | 124 | 107 | 109 | 125 | 114 | 118 | 114 |
| ASHRAE non-flammability | | | Non-flammable | Flammable | Non-flammable | Non-flammable | Non-flammable | Non-flammable | Non-flammable | Non-flammable | Non-flammable |

(continued)

| Item | | Unit | Comparative Example | Example 3-57 | Example 3-58 | Comparative Example 3-56 | Example 3-59 | Example 360 | Example 361 | Example 362 | |
|---|---|---|---|---|---|---|---|---|---|---|---|
| | | | | O | P | Q | R | S | T | X | |
| Composition | R32 | mass% | R404A | 18.7 | 18.7 | 18.7 | 18.7 | 18.7 | 18.7 | 18.7 | |
| | R125 | mass% | | 30.0 | 31.4 | 12.8 | 23.3 | 22.4 | 28.9 | 15.0 | |
| | 1234yf | mass% | | 36.4 | 30.7 | 26.2 | 19.0 | 40.4 | 26.9 | 24.7 | |
| | R134a | mass% | | 14.9 | 19.2 | 42.3 | 39.0 | 18.5 | 25.5 | 41.6 | |
| GWP | | Year | 3922 | 1391 | 1500 | 1180 | 1500 | 1176 | 1500 | 1247 | |
| Performance | Coefficient of performance | (relative to R404A%) | 100 | 106.85 | 107.05 | 110.17 | 109.23 | 107.75 | 107.75 | 109.98 | |
| | Refrigerating capacity | (relative to R404A%) | 100 | 95 | 95 | 84 | 88 | 91 | 93 | 85 | |
| | Outlet temperature | °C | 93 | 108 | 109 | 115 | 115 | 109 | 111 | 115 | |
| ASHRAE non-flammability | | | Non-flammable | Non-flammable | Non-flammable | Non-flammable | Non-flammable | Non-flammable | Non-flammable | Non-flammable | |

[Table 6-10]

| Item | | Unit | Comparative Example | Comparative Example 3-57 | Comparative Example 3-58 | Example 3-63 Example 3-63 | Example 3-64 | Comparative Example 3-59 | Example 3-65 Example 3-65 | Comparative Example 3-60 | Example 3-66 |
|---|---|---|---|---|---|---|---|---|---|---|---|
| | | | | A | D | G' | H' | I' | J=Q | K | L |
| Composition | R32 | mass% | R404A | 19.0 | 19.0 | 19.0 | 19.0 | 19.0 | 19.0 | 19.0 | 19.0 |
| | R125 | mass% | | 39.1 | 10.3 | 33.8 | 20.3 | 0.8 | 13.4 | 18.5 | 19.5 |
| | 1234yf | mass% | | 41.9 | 0.0 | 34.3 | 41.3 | 0.0 | 26.7 | 11.9 | 39.7 |
| | R134a | mass% | | 0.0 | 70.7 | 12.9 | 19.4 | 80.2 | 40.9 | 50.6 | 21.8 |
| GWP | | Year | 3922 | 1500 | 1500 | 1500 | 1118 | 1303 | 1183 | 1500 | 1124 |
| Performance | Coefficient of performance | (relative to R404A%) | 100 | 104.94 | 112.77 | 106.40 | 108.00 | 114.00 | 110.05 | 110.54 | 108.23 |
| | Refrigerating capacity | (relative to R404A%) | 100 | 102 | 79 | 98 | 91 | 75 | 85 | 85 | 90 |
| | Outlet temperature | °C | 93 | 104 | 124 | 108 | 109 | 126 | 115 | 119 | 110 |
| ASHRAE non-flammability | | | Non-flammable | Flammable | Non-flammable | Non-flammable | Non-flammable | Non-flammable | Non-flammable | Non-flammable | Non-flammable |

(continued)

| Item | | Unit | Comparative Example | Example 3-67 | Example 3-68 | Comparative Example 3-61 | Example 3-69 | Example 3-70 | Example 3-71 |
|---|---|---|---|---|---|---|---|---|---|
| | | | | M | O | P | R | S | T |
| Composition | R32 | mass% | R404A | 19.0 | 19.0 | 19.0 | 19.0 | 19.0 | 19.0 |
| | R125 | mass% | | 24.7 | 29.1 | 30.8 | 23.7 | 22.4 | 28.8 |
| | 1234yf | mass% | | 21.0 | 36.8 | 29.7 | 19.5 | 40.3 | 26.9 |
| | R134a | mass% | | 35.3 | 15.1 | 20.5 | 37.8 | 18.3 | 25.3 |
| GWP | | Year | 3922 | 1500 | 1364 | 1500 | 1500 | 1176 | 1500 |
| Performance | Coefficient of performance | (relative to R404A%) | 100 | 108.86 | 106.97 | 107.22 | 109.13 | 107.75 | 107.75 |
| | Refrigerating capacity | (relative to R404A%) | 100 | 90 | 95 | 95 | 89 | 92 | 93 |
| | Outlet temperature | °C | 93 | 114 | 108 | 110 | 115 | 109 | 111 |
| ASHRAE non-flammability | | | Non-flammable | Non-flammable | Non-flammable | Non-flammable | Non-flammable | Non-flammable | Non-flammable |

[Table 6-11]

| Item | | Unit | Comparative Example | Comparative Example 3-62 | Comparative Example 363 | Example 3-72 | Example 373 | Comparative Example 3-64 | Example 374 | Example 3-75 | Example 376 |
|---|---|---|---|---|---|---|---|---|---|---|---|
| | | | | A | D | G' | H' | I' | L | M=R | O |
| Composition | R32 | mass% | R404A | 19.3 | 19.3 | 19.3 | 19.3 | 19.3 | 19.3 | 19.3 | 19.3 |
| | R125 | mass% | | 39.0 | 10.4 | 33.9 | 20.6 | 1.1 | 19.0 | 24.2 | 28.1 |
| | 1234yf | mass% | | 41.7 | 0.0 | 34.1 | 41.0 | 0.0 | 37.8 | 20.0 | 37.1 |
| | R134a | mass% | | 0.0 | 70.3 | 12.7 | 19.1 | 79.6 | 23.9 | 36.5 | 15.5 |
| GWP | | Year | 3922 | 1500 | 1500 | 1500 | 1126 | 1307 | 1139 | 1500 | 1337 |
| Performance | Coefficient of performance | (relative to R404A%) | 100 | 104.98 | 112.75 | 106.40 | 107.98 | 113.96 | 108.44 | 10901 | 107.11 |
| | Refrigerating capacity | (relative to R404A%) | 100 | 102 | 79 | 98 | 91 | 75 | 90 | 90 | 95 |
| | Outlet temperature | °C | 93 | 104 | 124 | 108 | 109 | 126 | 111 | 115 | 109 |
| ASHRAE non-flammability | | - | Non-flammable | Flammable | Non-flammable | Non-flammable | Non-flammable | Non-flammable | Non-flammable | Non-flammable | Non-flammable |

EP 3 378 918 B1

(continued)

| Item | | Unit | Comparative Example | Example 3-77 | Example 378 | Example 379 | Example 3-80 |
|---|---|---|---|---|---|---|---|
| | | | | P | Q | S | T |
| Composition | R32 | mass% | R404A | 19.3 | 19.3 | 19.3 | 19.3 |
| | R125 | mass% | | 30.2 | 14.0 | 22.5 | 28.8 |
| | 1234yf | mass% | | 28.7 | 27.2 | 40.1 | 26.8 |
| | R134a | mass% | | 21.8 | 39.5 | 18.1 | 25.1 |
| GWP | | Year | 3922 | 1500 | 1186 | 1178 | 1500 |
| Performance | Coefficient of performance | (relative to R404A%) | 100 | 107.40 | 109.93 | 107.75 | 107.75 |
| | Refrigerating capacity | (relative to R404A%) | 100 | 95 | 86 | 92 | 94 |
| | Outlet temperature | °C | 93 | 111 | 115 | 109 | 112 |
| ASHRAE non-flammability | | - | Non-flammable | Non-flammable | Non-flammable | Non-flammable | Non-flammable |

[Table 6-12]

| Item | | Unit | Comparative Example | Comparative Example 3-65 | Comparative Example 3-66 | Example 3-81 | Example 3-82 | Comparative Example 3-67 | Example 383 | Comparative Example 3-68 | Example 3-84 |
|---|---|---|---|---|---|---|---|---|---|---|---|
| | | | | A | D | G' | H' | I' | L | M | O |
| Composition | R32 | mass% | R404A | 20.0 | 20.0 | 20.0 | 20.0 | 20.0 | 20.0 | 20.0 | 20.0 |
| | R125 | mass% | | 38.9 | 10.7 | 33.8 | 21.2 | 1.8 | 18.0 | 23.0 | 25.9 |
| | 1234yf | mass% | | 41.1 | 0.0 | 33.7 | 40.4 | 0.0 | 33.9 | 17.9 | 37.9 |
| | R134a | mass% | | 0.0 | 69.3 | 12.5 | 18.4 | 78.2 | 28.1 | 39.1 | 16.2 |
| GWP | | Year | 3922 | 1500 | 1500 | 1500 | 1142 | 1316 | 1168 | 1500 | 1275 |
| Performance | Coefficient of performance | (relative to R404A%) | 100 | 105.06 | 112.70 | 106.46 | 107.94 | 113.85 | 108.87 | 109.37 | 107.41 |
| | Refrigerating capacity | (relative to R404A%) | 100 | 103 | 80 | 99 | 93 | 76 | 90 | 90 | 95 |
| | Outlet temperature | °C | 93 | 105 | 125 | 109 | 110 | 127 | 113 | 117 | 110 |
| ASHRAE non-flammability | | - | Non-flammable | Flammable | Non-flammable | Non-flammable | Non-flammable | Non-flammable | Non-flammable | Non-flammable | Non-flammable |

(continued)

| Item | | Unit | Comparative Example | Example 3-85 | Example 3-86 | Example 3-87 | Example 3-88 | Example 389 |
|---|---|---|---|---|---|---|---|---|
| | | | | P=T | Q | R | S | Y |
| Composition | R32 | mass% | R404A | 20.0 | 20.0 | 20.0 | 20.0 | 20.0 |
| | R125 | mass% | | 28.9 | 15.4 | 25.2 | 22.8 | 21.0 |
| | 1234yf | mass% | | 26.5 | 28.3 | 21.1 | 39.6 | 24.2 |
| | R134a | mass% | | 24.6 | 36.3 | 33.7 | 17.6 | 34.8 |
| GWP | | Year | 3922 | 1500 | 1194 | 1500 | 1186 | 1369 |
| Performance | Coefficient of performance | (relative to R404A%) | 100 | 107.75 | 109.65 | 108.78 | 107.75 | 109.16 |
| | Refrigerating capacity | (relative to R404A%) | 100 | 95 | 88 | 92 | 93 | 90 |
| | Outlet temperature | °C | 93 | 112 | 115 | 115 | 110 | 115 |
| ASHRAE non-flammability | | - | Non-flammable | Non-flammable | Non-flammable | Non-flammable | Non-flammable | Non-flammable |

Reference Signs List

A: Composition ratio in which GWP = 1500 and the concentration (wt%) of R134a is 0 wt%

D: Composition ratio in which GWP = 1500 and the concentration (wt%) of 1234yf is 0 wt%

G: Composition ratio in which GWP = 1500 and which shows an ASHRAE non-flammability limit (when the WCFF becomes a liquid phase composition after 95% leak under the storage/shipping conditions)

H: Composition ratio showing an ASHRAE non-flammability limit (when the WCFF becomes a liquid phase composition after 95% leak under the storage/shipping conditions, and becomes a vapor phase composition at the time of 0% leak)

I: Composition ratio showing an ASHRAE non-flammability limit, in which the concentration (wt%) of 1234yf is 0 wt% (the WCFF is a vapor phase composition at the time of 0% leak under the storage/shipping conditions)

G': Composition ratio showing an intersection of a line segment in which GWP = 1500 and a line segment obtained by adding 1 wt% of non-flammable refrigerant R134a to line segment GH, which shows an ASHRAE non-flammability limit, in order to take into consideration safety factors of non-flammability

H': Composition ratio showing an intersection of a line segment obtained by adding 1 wt% of non-flammable refrigerant R134a to line segment GH, which shows an ASHRAE non-flammability limit, and a line segment obtained by adding 1 wt% of non-flammable refrigerant R125 to line segment HI

I': Composition ratio on a line segment obtained by adding 1 wt% of non-flammable refrigerant R125 to line segment HI, which shows an ASHRAE non-flammability limit, in order to take into consideration safety factors of non-flammability, in which the concentration (wt%) of 1234yf is 0 wt%

B: Composition ratio present on line segments G'H'I', in which the compressor outlet pressure is 102.5% of the R22 pressure

C: Composition ratio in which GWP = 1500 and the compressor outlet pressure is 102.5% of the R22 pressure

E: Composition ratio present on line segments G'H'I', in which the compressor outlet pressure is 97.5% of the R22 pressure

F: Composition ratio in which GWP = 1500 and the compressor outlet pressure is 97.5% of the R22 pressure

B': Composition ratio present on line segments G'H'I', in which the compressor outlet pressure is 101.25% of the R22 pressure

C': Composition ratio in which GWP = 1500 and the compressor outlet pressure is 101.25% of the R22 pressure

E': Composition ratio present on line segments G'H'I', in which the compressor outlet pressure is 98.75% of the R22 pressure

F': Composition ratio in which GWP = 1500 and the compressor outlet pressure is 98.75% of the R22 pressure

J: Composition ratio present on line segments G'H'I', in which the refrigerating capacity relative to that of R404 is 85%

K: Composition ratio in which GWP = 1500 and the refrigerating capacity relative to that of R404 is 85%

L: Composition ratio present on line segments G'H'I', in which the refrigerating capacity relative to that of R404 is 90%

M: Composition ratio in which GWP = 1500 and the refrigerating capacity relative to that of R404 is 90%

O: Composition ratio present on line segments G'H'I', in which the refrigerating capacity relative to that of R404 is 95%

P: Composition ratio in which GWP = 1500 and the refrigerating capacity relative to that of R404 is 95%

Q: Composition ratio present on line segments G'H'I', in which the compressor outlet temperature is 115°C

R: Composition ratio in which GWP = 1500 and the compressor outlet temperature is 115°C

S: Composition ratio present on line segments G'H'I', in which COP is 107.75% of that of R404A

T: Composition ratio in which GWP = 1500, and COP is 107.75% of that of R404A

V: Intersection of line segment ST and line segment LM

X: Intersection of line segment QR and line segment JK

Y: Intersection of line segment OR and line segment LM

N: Point in which R125 = 0 and R134a = 0 (0/0/100-x)

**Claims**

**1.** Use of a composition comprising a mixture or mixtures of fluorinated hydrocarbons;

the composition comprising the following mixture consisting of R32, R125, 1234yf, R134a and optionally $\leq 0.5$ wt.% of other components, wherein the composition ratio of the fluorinated hydrocarbons contained in the mixture is indicated in a ternary composition diagram in which the sum of the concentrations of R125, 1234yf, and R134a is represented by (100-x) wt%, when the sum of the concentrations of R32, R125, 1234yf, and R134a is 100 wt%, and the concentration of R32 is x wt%,
the mixture having a composition ratio in which

(1)

$$20.0\ wt\% > x \geq 18.1\ wt\%,$$

and

(2) the concentrations of R125, 1234yf, and 134a (R125 concentration (wt%)/1234yf concentration (wt%)/134a concentration (wt%)) fall within a quadrilateral having the following points B', C', F' and E' as vertices:

B' (-1.0442x+33.87/0.2539$x^2$-14.531x+212.38/100-R32-R125-1234yf),
C' (-1.3145x+43.588/-2.4717x+59.031/100-R32-R125-1234yf),
F' (-1.258x+39.651/0.0607$x^2$-4.7348x+75.905/100-R32-R125-1234yf), and
E' (-0.8869x+28.126/0.1994$x^2$-11.991x+177.97/100-R32-R125-1234yf),

as a refrigerant in any of refrigerating devices for freezing and refrigerating warehouses, turbo refrigerators, and screw refrigerators.

**2.** The use of claim 1, wherein the composition comprises a refrigerant oil.

**3.** The use of claim 2, wherein the refrigerant oil comprises at least one polymer selected from polyalkylene glycol (PAG), polyol ester (POE), and polyvinyl ether (PVE).

**4.** The use of any of claims 1-3, wherein the composition is an alternative refrigerant for R22.

**5.** The use of any of claims 1-4, wherein the composition comprises at least one substance selected from tracers, compatibilizers, ultraviolet fluorescence dyes, stabilizers, and polymerization inhibitors.

**6.** The use of claim 1, wherein the composition consists of the mixture of fluorinated hydrocarbons.

**Patentansprüche**

**1.** Verwendung einer Zusammensetzung, umfassend ein Gemisch oder Gemische fluorierter Kohlenwasserstoffe;

die Zusammensetzung umfassend das folgende Gemisch, das aus R32, R125, 1234yf, R134a und gegebenenfalls ≤ 0,5 Gew.% anderen Bestandteilen besteht, worin das Zusammensetzungsverhältnis der in dem Gemisch enthaltenen fluorierten Kohlenwasserstoffe in einem ternären Zusammensetzungsdiagramm angegeben ist, in dem die Summe der Konzentrationen von R125, 1234yf und R134a durch (100-x) Gew.-% dargestellt ist, wenn die Summe der Konzentrationen von R32, R125, 1234yf und R134a 100 Gew.-% beträgt und die Konzentration von R32 x Gew.-% beträgt,
wobei das Gemisch ein Zusammensetzungsverhältnis aufweist, in dem

(1)

$$20,0\ Gew.\text{-}\% > x \geq 18,1\ Gew.\text{-}\%$$

und

(2) die Konzentrationen von R125, 1234yf und 134a (R125-Konzentration (Gew.-%)/1234yf-Konzentration (Gew.-%)/134a-Konzentration (Gew.-%)) in einem Viereck liegen, das die folgenden Punkte B', C', F' und E' als Eckpunkte aufweist

B' (-1,0442x+33,87/0,2539$x^2$-14,531x+212,38/100-R32-R125-1234yf),
C' (-1,3145x+43,588/-2,4717x+59,031/100-R32-R125-1234yf),

F' (-1,258x+39,651/0,0607x$^2$-4,7348x+75,905/100-R32-R125-1234yf) und
E' (-0,8869x+28,126/0,1994x$^2$-11,991x+177,97/100-R32-R125-1234yf),

als Kältemittel in allen Kühlgeräten für Gefrier- und Kühllager, Turbokühlschränken und Propellerkühlschränken.

2. Verwendung gemäß Anspruch 1, worin die Zusammensetzung ein Kältemittelöl umfasst.

3. Verwendung gemäß Anspruch 2, worin das Kältemittelöl mindestens ein Polymer umfasst, ausgewählt aus Polyalkylenglykol (PAG), Polyolester (POE) und Polyvinylether (PVE).

4. Verwendung gemäß einem der Ansprüche 1-3, worin die Zusammensetzung ein alternatives Kältemittel zu R22 ist.

5. Verwendung gemäß einem der Ansprüche 1-4, worin die Zusammensetzung mindestens eine Substanz umfasst, ausgewählt aus Tracern, Kompatibilitätsmitteln, UV-Fluoreszenzfarbstoffen, Stabilisatoren und Polymerisationsinhibitoren.

6. Verwendung gemäß Anspruch 1, worin die Zusammensetzung aus dem Gemisch fluorierter Kohlenwasserstoffe besteht.

## Revendications

1. Utilisation d'une composition comprenant un ou plusieurs mélanges d'hydrocarbures fluorés ;

la composition comprenant le mélange suivant composé de R32, de R125, de 1234yf, de R134a et facultativement ≤ 0,5 % en poids d'autres composants, dans laquelle le rapport de composition des hydrocarbures fluorés contenus dans le mélange est indiqué dans un diagramme de composition ternaire dans lequel la somme des concentrations de R125, de 1234yf et de R134a est représentée par (100-x) % en poids, lorsque la somme des concentrations de R32, R125, 1234yf et R134a est de 100 % en poids, et que la concentration de R32 est de x % en poids, le mélange ayant un rapport de composition dans lequel

(1) 20,0 % en poids > x ≥ 18,1 % en poids, et
(2) les concentrations de R125, 1234yf et 134a (concentration de R125 (% en poids)/concentration de 1234yf (% en poids)/concentration de 134a (% en poids)) se situent à l'intérieur d'un quadrilatère dont les sommets sont les points B', C', F' et E' :

B' (-1,0442x+33,87/0,2539x$^2$-14,531x+212,38/100-R32-R125-1234yf),
C' (-1,3145x+43,588/-2,4717x+59,031/100-R32-R125-1234yf),
F' (-1,258X+39,651/0,0607x$^2$-4,7348x+75,905/100-R32-R125-1234yf), et
E' (-0,8869X+28,126/0,1994x$^2$-11,991x+177,97/100-R32-R125-1234yf),

comme fluide frigorigène dans n'importe quels dispositifs frigorifiques pour la congélation et la réfrigération des entrepôts, les turbo-réfrigérateurs et les réfrigérateurs à vis.

2. Utilisation selon la revendication 1, dans laquelle la composition comprend une huile frigorigène.

3. Utilisation selon la revendication 2, dans laquelle l'huile frigorigène comprend au moins un polymère choisi parmi le polyalkylène glycol (PAG), l'ester de polyol (POE) et l'éther polyvinylique (PVE).

4. Utilisation selon l'une quelconque des revendications 1 à 3, dans laquelle la composition est un réfrigérant alternatif au R22.

5. Utilisation selon l'une quelconque des revendications 1 à 4, dans laquelle la composition comprend au moins une substance choisie parmi les traceurs, les compatibilisants, les colorants à fluorescence ultraviolette, les stabilisants, et les inhibiteurs de polymérisation.

6. Utilisation selon la revendication 1, dans laquelle la composition consiste en un mélange d'hydrocarbures fluorés.

Fig.1

Fig.6

Fig.7

Fig.21

Fig.22

Fig.23

Fig.25

Fig.36

Fig.37

Fig.38

Fig.39

Fig.40

## REFERENCES CITED IN THE DESCRIPTION

**Patent documents cited in the description**

- JP 2869038 B
- US 8168077 B
- JP 5689068 B
- JP 2013529703 A
- US 2013096218 A
- US 2014331697 A